# EUROPEAN PATENT SPECIFICATION

(11) **EP 3 249 488 B1**
(45) Date of publication and mention of the grant of the patent: **06.10.2021**
(21) Application number: 15878559.2
(22) Date of filing: 20.08.2015
(51) Int. Cl.: A24F 40/57, A24F 47/00, G05D 23/19, G05D 23/24

(54) **TEMPERATURE CONTROL SYSTEM AND CONTROL METHOD THEREOF, AND ELECTRONIC CIGARETTE CONTAINING SAID TEMPERATURE CONTROL SYSTEM**
TEMPERATURREGELUNGSSYSTEM UND REGELUNGSVERFAHREN DAFÜR UND ELEKTRONISCHE ZIGARETTE MIT BESAGTEM TEMPERATURREGELUNGSSYSTEM
SYSTÈME DE COMMANDE DE TEMPÉRATURE ET PROCÉDÉ DE COMMANDE ASSOCIÉ, ET CIGARETTE ÉLECTRONIQUE CONTENANT LEDIT SYSTÈME DE COMMANDE DE TEMPÉRATURE

(30) Priority: 22.01.2015 CN 201510033982
(43) Date of publication of application: 29.11.2017
(73) Proprietor: Joyetech (Changzhou) Electronics Co., Ltd., Changzhou Jiangsu JS 213125 (CN)
(72) Inventor: QIU, Weihua, Jiangsu 213125 (CN)
(74) Representative: CMS Cameron McKenna Nabarro Olswang LLP
(86) International application number: PCT/CN2015/087597
(87) International publication number: WO 2016/115890

(56) References cited:
- WO-A1-2014/102091
- WO-A1-2014/166121
- CN-A- 102 754 924
- CN-A- 104 007 775
- CN-A- 104 116 138
- CN-U- 203 643 774
- CN-U- 203 952 441
- CN-U- 204 032 368
- US-A- 6 040 560
- None

## Description

### FIELD

The subject matter herein generally relates to electronic cigarette technology, and particularly, to an electronic cigarette temperature control system and method, and an electronic cigarette with the same.

### BACKGROUND

Electronic cigarettes, also known as virtual cigarettes, have similar taste as conventional cigarettes, and are mainly used to simulate smoking without affecting health, for smoking cessation or replacing conventional cigarettes. However, with increasing of the output voltage or output power of a battery assembly of the electronic cigarette and decreasing of the resistance of a heating member of the atomizing device, the temperature generated by the heating member becomes higher. An excessive temperature of the heating member may lead the smoke liquid, the wax, or the tobacco to produce and release some substances which are harmful to health.

CN102754924A relates to an evaporation type electronic cigarette. The evaporation type electronic cigarette comprises a casing (1), a battery (2) and a control unit (3). The battery (2) and the control unit (3) are arranged in the casing (1). One end of the casing (1) is provided with a suction nozzle (11). A control switch (12) for controlling a working state of an electric heating piece (41) is arranged on the casing (1) and is connected with the control unit (3). An oven (4) for placing tobacco compositions is further arranged in the casing (1). An air inlet hole (42) and the electric heating piece (41) for evaporating the tobacco compositions are arranged on the oven (4). The oven (4) is communicated with the suction nozzle (11), and the battery (2) is electrically connected with the electric heating piece (41) through the control unit (3). The evaporation type electronic cigarette has the advantages of being real in taste, small in volume and convenient to use, free of carbon monoxide, tar and passive smoking in combustion.

WO2014102091A1 relates to a heated aerosol-generating device and method for generating aerosol with consistent properties. The method of controlling aerosol production is in an aerosol-generating device. The device comprises a heater comprising at least one heating element configured to heat an aerosol-forming substrate and a power source for providing power to the heating element. The method comprises the steps of: controlling the power provided to the heating element such that in a first phase power is provided such that the temperature of the heating element increases from an initial temperature to a first temperature, in a second phase power is provided such that the temperature of the heating element drops below the first temperature and in a third phase power is provided such that the temperature of the heating element increases again. Increasing the temperature of the heating element during a final phase of the heating process reduces or prevents the reduction in aerosol delivery over time.

CN203643774U relates to an electronic cigarette. The electronic cigarette is capable of effectively controlling temperature of a heating element, preventing the heating element from being overburnt, and effectively improving detection sensitivity of the electronic cigarette. The electronic cigarette comprises an atomizing device, a power supply device and a control circuit. A heating element is disposed in the atomizing device. The control circuit comprises a master control circuit, and a detection circuit and a switching circuit which are electrically connected with the master control circuit respectively. The detection circuit is used for detecting smoking motion, and the switching circuit is used for turning on or turning off an electric loop between the heating element and the power supply device. The control circuit also comprises a first temperature detection circuit electrically connected with the master control circuit, and the first temperature detection circuit is used for monitoring temperature of the heating element and controlling the switching circuit to turn on or turn off through the master control circuit.

WO2014166121A1 relates to a heating apparatus with temperature control function, temperature control method, and tobacco evaporator. The heating apparatus with a temperature control function. The heating apparatus comprises an electric power supply and a heating control switch connected to the electric power supply, and also comprises a heating element and a microcontroller. The microcontroller is separately connected to the heating element and the heating control switch. The heating element is used for heating, and measuring data of a calculated actual temperature of the heating element. The microcontroller is used for performing calculation according to the data to obtain the actual temperature, and comparing the actual temperature with a preset reference temperature inside the microcontroller, and controlling the switching of the heating control switch according to the comparison result, so as to implement heating control on the heating element. The heating element of the present invention is used as a heater and is also be used as a temperature measurer, so that a temperature can be measured without requiring an additional temperature sensor, thereby making the measurement accurate, the occupancy size small and the mounting convenient.

### SUMMARY OF THE INVENTION

The present invention provides an electronic cigarette temperature control system according to the features of claim 1, and an electronic cigarette with the same for controlling the temperature of the heating element within a reasonable range.

The technical solution to achieve the object of the present invention is as follows:

An object of the present invention is to provide an electronic cigarette temperature control system which includes a power supply, a heating element, a temperature detection element, and a processor. The power supply is electrically coupled to the heating element and the processor. The temperature detection element is electrically coupled to the processor, which is configured to detect a change of a temperature T of the heating element, and output the change of the temperature T of the heating element to the processor. The processor is configured to determine whether the heating element has temperature coefficient of resistance characteristics according to a resistance value RL of the heating element before the heating element is powered on and a resistance value RL of the heating element after the processor detects that the heating element is powered on. The processor further determines a temperature t of the temperature detection element according to an associated physical quantity x of the temperature detection element, and calculate the temperature T of the heating element according to the temperature t of the temperature detection element if the heating element does not have temperature coefficient of resistance characteristics. The associated physical quantity x is one of a temperature t, a resistance, a voltage, a current, a resonant frequency, an optical power, and any combination thereof. The processor is further configured to compare the temperature T of the heating element with a pre-stored upper threshold of an operating temperature TH and a pre-stored lower threshold of the operating temperature TL, and control an output voltage or an output power from the power supply to the heating element according to the result of the comparison.

Furthermore, the temperature detection element can be selected from one of a group consisting of a positive temperature coefficient (PTC) thermistor, a negative temperature coefficient (NTC) thermistor, a bimetallic strip, a thermocouple, a quartz crystal temperature sensor, an optical fiber temperature sensor, an infrared temperature sensor, a P-N junction temperature sensor, and any combination thereof.

Preferably, the temperature detection element can be arranged to be adjacent to the heating element.

Furthermore, the temperature detection element is a PTC thermistor, and the associated physical quantity x of the temperature detection element is a resistance value R_{T} of the PTC thermistor.

Furthermore, the electronic cigarette temperature control system can further include a fixed resistor R₅ coupled with the temperature detection element in series. A voltage drop across the fixed resistor R₅ is (Vₑ - V_{f}), a current flowing through the fixed resistor R₅ is (Vₑ - V_{f}) / R₅, voltage drop across the temperature detection element is Vf, and the resistance value R_{T} of the temperature detection element can be expressed by R_{T} = R₅ ∗ V_{f}/ (Vₑ - V_{f}).

The detecting unit can be electrically coupled to the temperature detection element. The detecting unit can be configured to detect the voltage drop Vf across the temperature detection element, and output the voltage drop Vf across the temperature detection element to the operation unit.

The operation unit can pre-store a first formula, a relationship between the resistance value R_{T} of the temperature detection element and the temperature t of the temperature detection element, and a second formula. The first formula is R_{T} = R₅ ∗ V_{f}/ (Vₑ - Vf). The second formula is T=t+Δt. The operation unit can be configured to calculate the temperature T of the heating element according to the voltage drop Vf, the first formula, the relationship between the resistance value R_{T} and the temperature t of the temperature detection element, and the second formula, and can further output the temperature T of the heating element to the processing unit.

The processing unit can compare the temperature T of the heating element with the pre-stored the upper threshold of the operating temperature T_{H} and the lower threshold of the operating temperature T_{L}. The output voltage / the output power from the power supply to the heating element can be controlled accordingly.

Furthermore, the electronic cigarette temperature control system can further include an input device electrically coupled to the processor. The input device can be configured to provide an interface for a user to input a desired target temperature T_{D}. The desired target temperature T_{D} can be greater than or equal to the lower threshold of the operating temperature T_{L} and be less than or equal to the upper threshold of the operating temperature T_{H}, that is T_{L}≤T_{D}≤T_{H}.

Furthermore, the electronic cigarette temperature control system can further include a thermostatic switch coupled between the power supply and the heating element. The thermostatic switch can still control the temperature of heating element when the temperature detection element and/or the processor malfunction.

An object of the present disclosure not being part of the invention, is to provide an electronic cigarette temperature control system which can include a power supply, a thermostatic switch, and a heating element coupled in sequence. The switching temperature T_{M} of the thermostatic switch can be less than an upper threshold of an operating temperature T_{H} of the electronic cigarette temperature control system.

Furthermore, the thermostatic switch can be selected from one of a group consisting of a mechanical thermostatic switch, an electronic thermostatic switch, a temperature relay, and any combination thereof.

Furthermore, the mechanical thermostatic switch can be a vapor pressure thermostatic switch, a liquid expansion thermostatic switch, a gas adsorption thermostatic switch, or a metal expansion thermostatic switch. The electronic thermostatic switch can be a resistance thermostatic switch or a thermocouple thermostatic switch. The temperature relay can be a thermal reed relay.

Furthermore, the temperature tₛ of the thermostatic switch can increase when the temperature T of the heating element increases. When the temperature tₛ of the thermostatic switch is less than a switch temperature T_{M} of the thermostatic switch, the thermostatic switch can turn on a connection between the power supply and the heating element. The heating element can work normally. The temperature T of the heating element can increase accordingly. When the temperature tₛ of the thermostatic switch is greater than the switch temperature T_{M} of the thermostatic switch, the thermostatic switch can turn off the connection between the power supply and the heating element. The heating element can stop working. The temperature T of the heating element can naturally decrease.

Preferably, the thermostatic switch can be arranged to be adjacent to the heating element.

An object of the present disclosure not being part of the invention, is to provide an electronic cigarette temperature control system which can include a power supply, a heating element, a processor, and a thermostatic switch. The processor can be electrically coupled to the power supply and the thermostatic switch. The heating element can be electrically coupled to the power supply. The thermostatic switch can be arranged to be adjacent to the heating element. The switching temperature T_{M} of the thermostatic switch can be less than an upper threshold of an operating temperature T_{H} of the electronic cigarette temperature control system.

Furthermore, the thermostatic switch can be selected from one of a group consisting of a mechanical thermostatic switch, an electronic thermostatic switch, a temperature relay, and any combination thereof.

Furthermore, the mechanical thermostatic switch can be a vapor pressure thermostatic switch, a liquid expansion thermostatic switch, a gas adsorption thermostatic switch, or a metal expansion thermostatic switch. The electronic thermostatic switch can be a resistance thermostatic switch or a thermocouple thermostatic switch. The temperature relay can be a thermal reed relay.

Furthermore, the temperature tₛ of the thermostatic switch can increase when the temperature T of the heating element increases. When the temperature tₛ of the thermostatic switch is less than a switch temperature T_{M} of the thermostatic switch, the thermostatic switch can perform action A. When the temperature tₛ of the thermostatic switch is greater than the switch temperature T_{M} of the thermostatic switch, the thermostatic switch can perform action B. The processor can detect the action of the thermostatic switch, and control an output voltage / an output power from the power supply to the heating element according to the action of the thermostatic switch.

Furthermore, action A can be the thermostatic switch turn on and action B can be the thermostatic switch turn off, and in other embodiments, the action A can be the thermostatic switch turn off and the action B can be the thermostatic switch turn on.

Preferably, the thermostatic switch can be arranged to be adjacent to the heating element.

An object of the present disclosure not being part of the invention, is to provide an electronic cigarette temperature control system which can include a power supply, a heating element, and a processor. The power supply can be electrically coupled to the heating element and the processor. The heating element can be electrically coupled to the processor. The heating element can have temperature coefficient of resistance characteristics. The heating element can directly act as a temperature detection element and output a change of a temperature T of the heating element to the processor.

Furthermore, the heating element can be made of material selected from one of a group consisting of platinum, copper, nickel, titanium, iron, ceramic-based PTC materials, polymer-based PTC materials, and any combination thereof. The resistance value R_{L} of the heating element increases with the temperature T of the heating element.

Furthermore, the processor can determine the temperature T of the heating element according to the resistance value R_{L} of the heating element. The processor can further compare the temperature T of the heating element with an upper threshold of an operating temperature T_{H} and a lower threshold of an operating temperature T_{L}. An output voltage / an output power from the power supply to the heating element can be controlled accordingly.

Furthermore, the electronic cigarette temperature control system can further include a first fixed resistor R₁ coupled between the power supply and the heating element. A voltage drop across the first fixed resistor R₁ is (Vₐ - V_{b}), a voltage drop across the heating element is V_{b}, a current flowing through the heating element is (Vₐ - V_{b}) / R₁, and the resistance value R_{L} of the heating element is R₁ ^{∗} V_{b} / (Vₐ - V_{b}).

Furthermore, the electronic cigarette temperature control system can further include a second fixed resistor R₂, an amplifier, a third fixed resistor R₃, and a fourth fixed resistor R₄. The first fixed resistor R₁ can be coupled in parallel to a series connection of the second fixed resistor R₂, the amplifier, the third fixed resistor R₃. The fourth fixed resistor R₄ can be coupled with the amplifier in parallel, and based on the application characteristics of the amplifier, the voltage drop (Vₐ ― V_{b}) across the first fixed resistor R₁ is V_{c} ^{∗} R₂ / R₄.

Furthermore, the processor can include a detecting unit, an operation unit, and a processing unit coupled in sequence.

The detecting unit can be electrically coupled to the fourth fixed resistor R₄. The detecting unit can be configured to detect the voltage drop V_{c} across the fourth fixed resistor R₄, and output the voltage drop V_{c} across the fourth fixed resistor R₄ to the operation unit.

The operation unit can pre-store a third formula: (Vₐ - V_{b}) = V_{c} ^{∗} R₂ / R₄, a fourth formula: R_{L} = R₁ ^{∗} V_{b} / (Vₐ ― V_{b}), and a relationship between the resistance value R_{L} of the heating element and the temperature T of the heating element. The operation unit can be configured to calculate the temperature T of the heating element according to the voltage drop V_{c}, the third formula, the fourth formula, and the relationship between the resistance value R_{L} of the heating element and the temperature T of the heating element. The operation unit can be further configured to output the temperature T of the heating element to the processing unit.

The processing unit can compare the temperature T of the heating element with the pre-stored an upper threshold of an operating temperature T_{H} and a lower threshold of the operating temperature T_{L}. The output voltage / the output power from the power supply to the heating element can be controlled accordingly.

Furthermore, the electronic cigarette temperature control system can further include an input device coupled to the processor. The input device can be configured to provide an interface for a user to input a desired target temperature T_{D}. The desired target temperature T_{D} can be greater than or equal to the lower threshold of the operating temperature T_{L} and be less than or equal to the upper threshold of the operating temperature T_{H}, that is T_{L}≤T_{D}≤T_{H}.

Furthermore, the electronic cigarette temperature control system can further include a thermostatic switch coupled between the power supply and the heating element. The thermostatic switch can still control the temperature of heating element when the heating element and/or the processor malfunction.

Furthermore, the electronic cigarette temperature control system can further include a temperature detection element electrically coupled to the processor or a thermostatic switch electrically coupled to the processor.

Preferably, the temperature detection element or the thermostatic switch can be arranged to be adjacent to the heating element.

An object of the present disclosure not being part of the invention, is to provide an electronic cigarette temperature control method. The electronic cigarette temperature control method applied in an electronic cigarette temperature control system or an electronic cigarette, where the electronic cigarette temperature control system or the electronic cigarette includes a power supply, a heating element, a processor, and a temperature detection element. The electronic cigarette temperature control method can include:

The processor can obtain associated physical quantity x of the temperature detection element.

The processor can calculate the temperature T of the heating element according to the associated physical quantity x of the temperature detection element.

The processor can compare the temperature T of the heating element with an upper threshold of an operating temperature T_{H} and a lower threshold of the operating temperature T_{L}.

The processor can adjust an output voltage / an output power from the power supply to the heating element according to the result of the comparison.

The heating element can work for a period at the adjusted output voltage / the adjusted output power.

Furthermore, the step "the processor can adjust an output voltage / an output power from the power supply to the heating element according to the result of the comparison" can include:

The processor can control the power supply to reduce the output voltage / the output power to the heating element when the temperature T of the heating element is greater than the upper threshold of the operating temperature T_{H}.

Furthermore, the step "the processor can adjust an output voltage / an output power from the power supply to the heating element according to the result of the comparison" can include:

The processor controlling the power supply to maintain the output voltage / the output power to the heating element when the temperature T of the heating element is less than a lower threshold of the operating temperature T_{L} and the output voltage / the output power from the power supply to the heating element reaches a maximum output voltage / output power.

Furthermore, the step "the processor can adjust an output voltage / an output power from the power supply to the heating element according to the result of the comparison" can include:

The processor controlling the power supply to increase the output voltage / the output power to the heating element when the temperature T of the heating element is less than a lower threshold of the operating temperature T_{L} and the output voltage / the output power from the power supply to the heating element has not yet reached a maximum output voltage / output power.

Furthermore, the electronic cigarette temperature control system or the electronic cigarette can further include an input device. The electronic cigarette temperature control method can further include:

Receiving a target temperature T_{D} inputted by a user via the input device before the processor obtains the associated physical quantity x of the temperature detection element. The desired target temperature T_{D} may be greater than or equal to the lower threshold of the operating temperature T_{L} and may be less than or equal to the upper threshold of the operating temperature T_{H}. The desired target temperature T_{D} can replace the pre-stored upper threshold of the operating temperature T_{H} and the pre-stored lower threshold of the operating temperature T_{L}. The processor comparing the temperature T of the heating element with the desired target temperature T_{D}.

An object of the present disclosure is to provide an electronic cigarette temperature control method. The electronic cigarette temperature control method can be applied in an electronic cigarette temperature control system or an electronic cigarette. The electronic cigarette temperature control system or the electronic cigarette can include a power supply, a heating element, and a thermostatic switch. The electronic cigarette temperature control method can include:

The thermostatic switch can determine the relationship between a temperature tₛ of the thermostatic switch and a switch temperature T_{M} of the thermostatic switch.

The thermostatic switch turning on a connection between the power supply and the heating element when the temperature tₛ of the thermostatic switch is less than the switch temperature T_{M} of the thermostatic switch. The heating element accordingly works normally, the temperature T of the heating element accordingly increasing; and

The thermostatic switch turning off the connection between the power supply and the heating element when the temperature tₛ of the thermostatic switch is greater than the switch temperature T_{M} of the thermostatic switch. In this case, the heating element stops working, and the temperature T of the heating element naturally decreases.

An object of the present disclosure not being part of the invention, is to provide an electronic cigarette temperature control method. The electronic cigarette temperature control method can be applied in an electronic cigarette temperature control system or an electronic cigarette. The electronic cigarette temperature control system or the electronic cigarette can include a power supply, a heating element, a processor, and a thermostatic switch. The electronic cigarette temperature control method can include:

The processor can determine the relationship between a temperature tₛ of the thermostatic switch and a switch temperature T_{M} of the thermostatic switch based on the action of the thermostatic switch, where the thermostatic switch performing action A when the temperature tₛ of the thermostatic switch is less than the switch temperature T_{M} of the thermostatic switch, the thermostatic switch performing action B when the temperature tₛ of the thermostatic switch is greater than the switch temperature T_{M} of the thermostatic switch. Where the action A is the thermostatic switch turn on and the action B is the thermostatic switch turn off, and in other embodiments, the action A can be the thermostatic switch turn off and the action B can be the thermostatic switch turn on.

The processor can adjust an output voltage / an output power from the power supply to the heating element according to the action of the thermostatic switch.

The heating element can work for a period at the adjusted output voltage / the adjusted output power.

Furthermore, the step "the processor adjusting an output voltage / an output power from the power supply to the heating element according to the action of the thermostatic switch" can include:

The processor controlling the power supply to reduce the output voltage / the output power to the heating element when the thermostatic switch performs action B.

Furthermore, the step "the processor adjusting an output voltage / an output power from the power supply to the heating element according to the action of the thermostatic switch" can include:

The processor controlling the power supply to maintain the output voltage / the output power to the heating element when the thermostatic switch performs action A and the output voltage / the output power from the power supply to the heating element reaches a maximum output voltage / output power.

Furthermore, the step "the processor adjusting an output voltage / an output power from the power supply to the heating element according to the action of the thermostatic switch" can include:

The processor controlling the power supply to increase the output voltage / the output power to the heating element when the thermostatic switch performs action A and the output voltage / the output power from the power supply to the heating element is less than a maximum output voltage / output power.

An object of the present disclosure not being part of the invention, is to provide an electronic cigarette temperature control method. The electronic cigarette temperature control method can be applied in an electronic cigarette temperature control system or an electronic cigarette. The electronic cigarette temperature control system or the electronic cigarette can include a power supply, a heating element, and a processor. The electronic cigarette temperature control method can include:

The processor calculating a resistance value R_{L} of the heating element before the heating element is powered on;

The processor calculating the resistance value R_{L} of the heating element again after the processor detects that the heating element is powered on.

The processor determining whether the heating element has temperature coefficient of resistance characteristics.

The processor determining whether a temperature control mode is selected.

The processor calculating the resistance value R_{L} of the heating element.

The processor calculating the temperature T of the heating element according to the resistance value R_{L} of the heating element.

The processor comparing the temperature T of the heating element with a pre-stored upper threshold of an operating temperature T_{H} and a pre-stored lower threshold of the operating temperature T_{L}.

The processor adjusting an output voltage / an output power from the power supply to the heating element according to the result of the comparison.

The heating element working for a period at the adjusted output voltage / the adjusted output power.

Furthermore, the step "the processor determining whether the heating element has temperature coefficient of resistance characteristics" can include:

The processor automatically controlling the power supply to output a constant voltage / a constant power to the heating element or the processor controlling the power supply to output a selected voltage/ a selected power to the heating element when the heating element doesn't have temperature coefficient of resistance characteristics; and

The processor determining whether a temperature control mode is selected when the heating element has temperature coefficient of resistance characteristics.

Furthermore, the step "the processor determining whether a temperature control mode is selected" can include:

The processor automatically controlling the power supply to output a constant voltage / a constant power to the heating element or the processor controlling the power supply to output a selected voltage/ a selected power to the heating element when the temperature control mode is not selected; and

The processor calculating the resistance value R_{L} of the heating element when the temperature control mode is selected.

Furthermore, the step "the processor adjusting an output voltage / an output power from the power supply to the heating element according to the result of the comparison" can include:

The processor controlling the power supply to reduce the output voltage / the output power to the heating element when the temperature T of the heating element is greater than the upper threshold of the operating temperature T_{H}.

Furthermore, the step "the processor adjusting an output voltage / an output power from the power supply to the heating element according to the result of the comparison" can include:

The processor controlling the power supply to maintain the output voltage / the output power to the heating element when the temperature T of the heating element is less than the lower threshold of the operating temperature T_{L} and the output voltage / the output power from the power supply to the heating element reaches a maximum output voltage / output power.

Furthermore, the step "the processor adjusting an output voltage / an output power from the power supply to the heating element according to the result of the comparison" can include:

The processor controlling the power supply to increase the output voltage / the output power to the heating element when the temperature of the heating element is less than the lower threshold of the operating temperature T_{L} and the output voltage / the output power from the power supply to the heating element is less than a maximum output voltage / output power.

An object of the present disclosure not being part of the invention, is to provide an electronic cigarette executing any one of the above electronic cigarette temperature control method.

The disclosure brings about the following beneficial effects:

The electronic cigarette temperature control system and method, and the electronic cigarette with the same can maintain the temperature of the heating element at a reasonable range, avoiding the production and release of harmful substances. Thus, the electronic cigarette can maintain a good taste, save energy, avoid overheating of the housing of the electronic cigarette, and prevent thermal ageing of the inner components of the electronic cigarette.

The addition of an input device allows the user to set the operating temperature of the heating element according to a need.

The electronic cigarette can execute a double temperature control protection via adding the thermostatic switch coupled between the power supply and the heating element. This is especially important when the temperature detection element and/or the processor malfunction, as the electronic cigarette can still control the temperature of the heating element.

The user can employ the heating element of the atomizer assembly portion which has or doesn't have temperature coefficient of resistance characteristics to execute the temperature control via adding the temperature detection element / the thermostatic switch and the processor. Thus, greater versatility is presented by the electronic cigarette temperature control system and the electronic cigarette.

### BRIEF DESCRIPTION OF THE DRAWINGS

FIG. 1 illustrates a circuit schematic diagram of a first embodiment of an electronic cigarette temperature control system.
FIG. 2 illustrates a detailed circuit schematic diagram of the first embodiment of the electronic cigarette temperature control system.
FIG. 3 illustrates a flowchart of a first embodiment of an electronic cigarette temperature control method.
FIG. 4 illustrates a circuit schematic diagram of a second embodiment of the electronic cigarette temperature control system.
FIG. 5 illustrates a flowchart of a second embodiment of the electronic cigarette temperature control method.
FIG. 6 illustrates a circuit schematic diagram of a third embodiment of the electronic cigarette temperature control system.
FIG. 7 illustrates a circuit schematic diagram of a fourth embodiment of the electronic cigarette temperature control system.
FIG. 8 illustrates a flowchart of a fourth embodiment of the electronic cigarette temperature control method.
FIG. 9 illustrates a circuit schematic diagram of a fifth embodiment of the electronic cigarette temperature control system.
FIG. 10 illustrates a detailed circuit schematic diagram of the fifth embodiment of the electronic cigarette temperature control system.
FIG. 11 illustrates a flowchart of a fifth embodiment of the electronic cigarette temperature control method.
FIG. 12 illustrates a circuit schematic diagram of a sixth embodiment of the electronic cigarette temperature control system.
FIGs. 13 illustrate a flowchart of a sixth embodiment of the electronic cigarette temperature control method.
FIG. 14 illustrates a circuit schematic diagram of a seventh embodiment of the electronic cigarette temperature control system.
FIG. 15 illustrates a circuit schematic diagram of an eighth embodiment of the electronic cigarette temperature control system.
FIG. 16 illustrates a circuit schematic diagram of a ninth embodiment of the electronic cigarette temperature control system.
FIG. 17 illustrates a circuit schematic diagram of a tenth embodiment of the electronic cigarette temperature control system.

### ELEMENT LISTING

| | |
|---|---|
| electronic cigarette temperature control system | 100, 200, 300, 400, 500, 600, 700, 800, 900 |
| power supply | 11, 31, 51 |
| battery | 111, 511 |
| DC/DC converter | 112, 512 |
| voltage-stabilizing circuit | 113, 513 |
| heating element | 12, 32, 52 |
| temperature detection element | 13, 83, 93 |
| processor | 14, 44, 54 |
| detecting unit | 141, 541 |
| operation unit | 142, 542 |
| input device | 25, 65 |
| thermostatic switch | 36, 76 |
| amplifier | 57 |
| electronic cigarette | 10 |
| housing | 101 |
| mouthpiece | 102 |
| liquid tank | 103 |
| liquid guiding component | 104 |

### DETAILED DESCRIPTION

The present disclosure will be described in detail with reference to the accompanying drawings in order to provide a clearer understanding of the technical features, objects and effects of the present invention.

### The first embodiment:

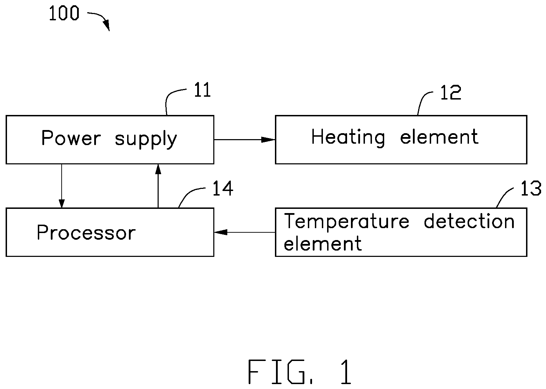

Referring to FIG. 1, an electronic cigarette temperature control system 100 is provided, which includes a power supply 11, a heating element 12, a temperature detection element 13 and a processor 14. The power supply 11 can be electrically coupled to the heating element 12 and the processor 14. The temperature detection element 13 can be electrically coupled to the processor 14. The heating element 12 can heat smoke liquid, wax, or tobacco to generate vapor, causing a user to experience a simulation of tobacco smoking after the power supply 11 supplies power to the heating element 12.

The temperature detection element 13 is configured to detect a change of a temperature T of the heating element 12. The temperature t of the temperature detection element 13 will increase as the temperature T of the heating element 12 increases, to make a change of an associated physical quantity x of the temperature detection element 13, and the processor 14 can detect the associated physical quantity x and calculate the temperature T of the heating element 12 according to the associated physical quantity x.

The temperature detection element 13 is arranged in an electronic cigarette. Preferably, the temperature detection element 13 can be arranged to be adjacent to the heating element 12. The temperature detection element 13 can be selected from one of a group comprising of a positive temperature coefficient (PTC) thermistor, a negative temperature coefficient (NTC) thermistor, a bimetallic strip, a thermocouple, a quartz crystal temperature sensor, an optical fiber temperature sensor, an infrared temperature sensor, a P-N junction temperature sensor, and any combination thereof. The number of the temperature detection elements 13 can be one, two, or more than two. If space allows, a number of temperature detection elements 13 of one kind and/or of different kinds can be arranged at different positions of the electronic cigarette. On one hand, the temperature T of the heating element 12 can be calculated according to the temperatures sensed by each of the temperature detection elements 13, and then an average value of the temperature of the heating element 12 can be calculated. The average value of the temperature of the heating element 12 can more accurately reflect the actual temperature T of the heating element 12. On the other hand, when one of the temperature detection elements 13 is malfunctioning, the processor 14 can timely determine and eliminate unreliable data, thereby the electronic cigarette temperature control system 100 can work normally with a higher temperature control accuracy.

The associated physical quantity x can be selected from one of a group consisting of a temperature t, a resistance, a voltage, a current, a resonant frequency, an optical power, and any combination thereof according to individual differences in the different detection elements of the temperature detection element 13.

The processor 14 can determine the temperature t of the temperature detection element 13 according to the associated physical quantity x of the temperature detection element 13, and determine the temperature T of the heating element 12 according to the temperature t of the temperature detection element 13. The processor 14 can further compare the temperature T of the heating element 12 with an upper threshold of the operating temperature T_{H} and a lower threshold of the operating temperature T_{L}. An output voltage / an output power from the power supply 11 to the heating element 12 can be controlled accordingly.

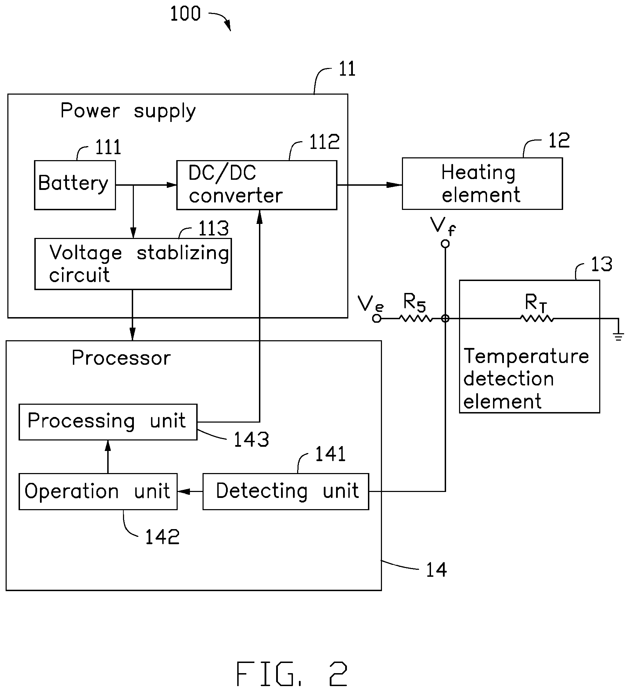

Referring also to FIG. 2, in the illusrtated embodiment, the temperature detection element 13 can be a PTC thermistor. The temperature t of the temperature detection element 13 can increase as the temperature T of the heating element 12 increases. The resistance value R_{T} of the temperature detection element 13 can increase with the increasing of temperature t of the temperature detection element 13. In the illustrated embodiment, the associated physical quantity x of the temperature detection element 13 can be a resistance value R_{T}.

Furthermore, in order for convenient measurement of the resistance value R_{T} of the temperature detection element 13, the temperature detection element 13 can be coupled with a fixed resistor R₅ in series. A voltage drop across the fixed resistor R₅ can be (Vₑ - V_{f}). Thus, a current flowing through the fixed resistor R₅ can be (Vₑ - V_{f}) / R₅. A voltage drop across the temperature detection element 13 can be Vf, thus the resistance value R_{T} of the temperature detection element 13 can be expressed by R_{T} = R₅ ∗ V_{f}/ (Vₑ - V_{f}).

In detail, the processor 14 can include a detecting unit 141, an operation unit 142, and a processing unit 143 coupled in sequence. The detecting unit 141 can be electrically coupled to the temperature detection element 13, to detect the voltage drop Vf across the temperature detection element 13, and output the voltage drop Vf to the operation unit 142. The operation unit 142 can pre-store a first formula, a relationship between the resistance value R_{T} and the temperature t of the temperature detection element 13, and a second formula. The first formula can be R_{T} = R₅ ∗ V_{f} / (Vₑ - V_{f}). The second formula can be T=t+Δ t, where Δ t can be an experimental data presenting the difference between the temperature of the heating element 12 and the temperature of the temperature detection element 13. The operation unit 142 can calculate the resistance value R_{T} of the temperature detection element 13 according to the first formula R_{T} = R₅ ∗ V_{f} / (Vₑ - V_{f}), and calculate the temperature t of the temperature detection element 13 according to the relationship between the resistance value R_{T} of the temperature detection element 13 and the temperature t of the temperature detection element 13. The operation unit 142 can further calculate the temperature T of the heating element 12 according to the second formula T=t+Δ t, and output the temperature T of the heating element 12 to the processing unit 143. The processing unit 143 can compare the temperature T of the heating element 12 with the pre-stored upper threshold of the operating temperature T_{H} and the lower threshold of the operating temperature T_{L}, and control the output voltage / the output power from the power supply 11 to the heating element 12 accordingly.

Furthermore, the power supply 11 can include a battery 111, a DC/DC converter 112, and a voltage-stabilizing circuit 113. The battery 111 can be electrically coupled to the DC/DC converter 112 and the steady voltage circuit 113. The battery 111 can be charged with sufficient energy to power the DC/DC converter 112 and the voltage-stabilizing circuit 113. The DC/DC converter 112 can be electrically coupled to the heating element 12. The DC/DC converter 112 can boost a voltage from the battery 111 to the heating element 12. The voltage-stabilizing circuit 113 can be electrically coupled to the processor 14. The voltage-stabilizing circuit 113 can output a constant voltage Vₑ to the processor 14. In the illustrated embodiment, the battery 111 can be a lithium-ion battery. It will be appreciated that, in other embodiments, the DC/DC converter 112 and the voltage-stabilizing circuit 113 can be omitted, or be replaced by other circuits.

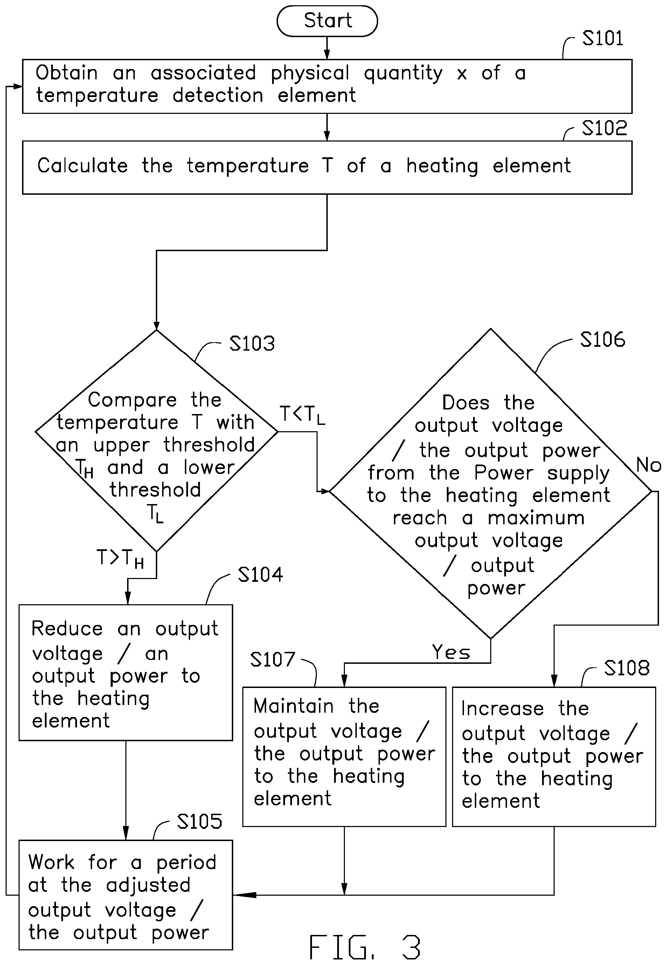

Referring to FIG. 3, the electronic cigarette temperature control system 100 of the invention includes the following steps in operation:

At step S101, the processor 14 can obtain the associated physical quantity x of the temperature detection element 13. Then the procedure goes to step S102.

At step S102, the processor 14 can calculate the temperature T of the heating element 12 according to the associated physical quantity x of the temperature detection element 13. Then the procedure goes to step S103.

At step S103, the processor 14 can compare the temperature T of the heating element 12 with the upper threshold of the operating temperature T_{H} and the lower threshold of the operating temperature T_{L}. If the temperature T of the heating element 12 is greater than the upper threshold of the operating temperature T_{H}, the procedure goes to step S104. If the temperature T of the heating element 12 is less than the lower threshold of the operating temperature T_{L}, the procedure goes to step S106.

At step S104, the processor 14 can control the power supply 11 to reduce the output voltage / the output power to the heating element 12. Then the procedure goes to step S105.

At step S105, the heating element 12 can work for a period at the adjusted output voltage / the adjusted output power. Then, the procedure goes back to step S101, and repeats the subsequent processing. In the illustrated embodiment, the period can be one second.

At step S106, the processor 14 can determine whether the output voltage / the output power from the power supply 11 to the heating element 12 reaches a maximum output voltage / output power.

If the output voltage / the output power from the power supply 11 to the heating element 12 reaches the maximum output voltage / output power, the procedure goes to step S107. If the output voltage / the output power from the power supply 11 to the heating element 12 has not yet reached the maximum output voltage / output power, the procedure goes to step S108.

At step S107, the processor 14 can control the power supply 11 to maintain the output voltage / the output power to the heating element 12. Then the procedure goes to step S105.

At step S108, the processor 14 can control the power supply 11 to increase the output voltage / the output power to the heating element 12. Then the procedure goes to step S105.

In other embodiments, the electronic cigarette temperature control system 100 can further include a display. The display can be configured to display information about work state of the electronic cigarette, such as, a temperature T of the heating element, a battery power, a work voltage, an output power, or the like.

### The second embodiment:

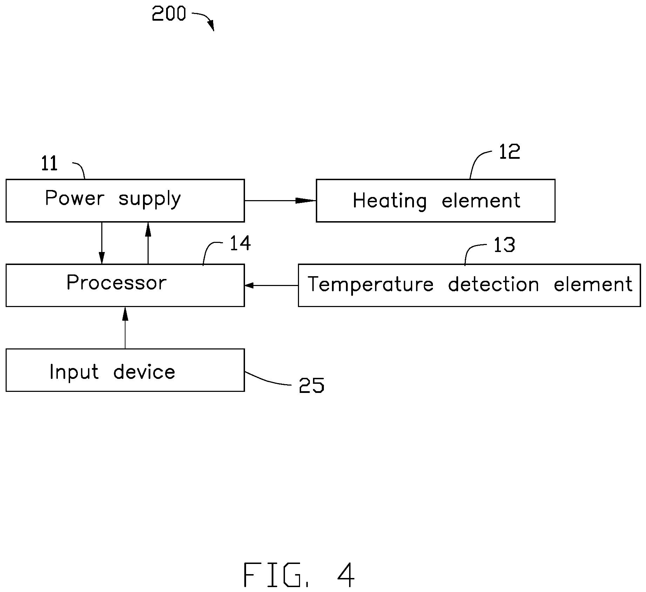

Referring to FIG. 4, an electronic cigarette temperature control system 200 is provided. The electronic cigarette temperature control system 200 of the second embodiment can be similar to the electronic cigarette temperature control system 100 of the first embodiment, except that:

The electronic cigarette temperature control system 200 can further include an input device 25 electrically coupled to the processor 14. The user can input a desired target temperature T_{D} (T_{L}≤T_{D}≤T_{H}) via the input device 25. The heating element 12 can be maintained to work at a temperature T_{D} ± Δt' under the control of the processor 14. Where Δt' represents a temperature deviation, which is generated by a certain lag of a response time of the power supply 11, the heating element 12, the temperature detection element 13, and the processor 14.

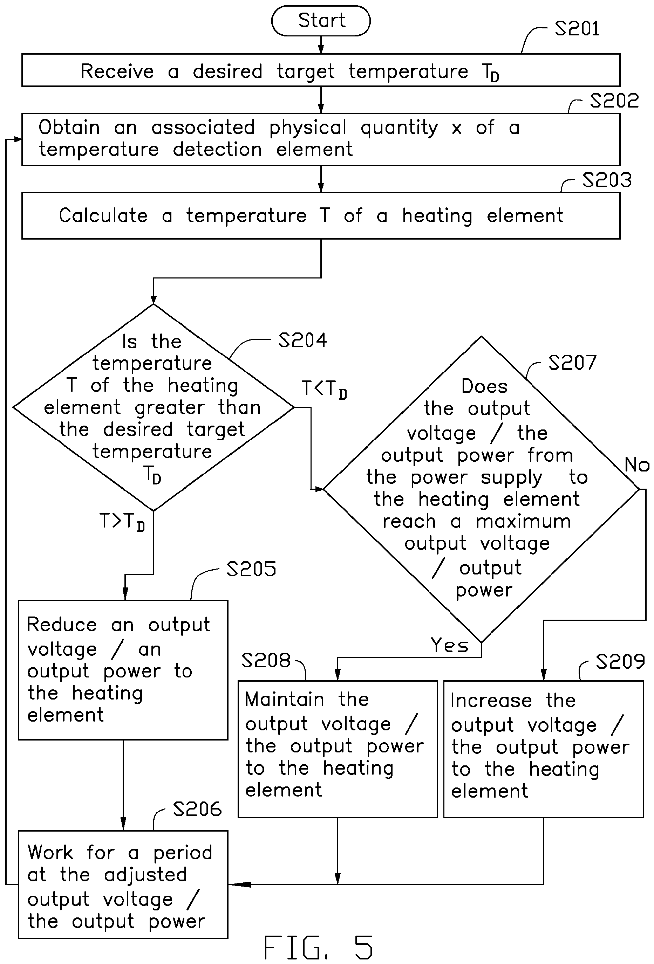

Referring to FIG. 5, the electronic cigarette temperature control method 200 of the invention includes the following steps in operation:

At step S201, the processor 14 can receive a desired target temperature T_{D} (T_{L}≤T_{D}≤T_{H}) inputted from the user via the input device 25. Then the procedure goes to step S202.

At step S202, the processor 14 can obtain the associated physical quantity x of the temperature detection element 13. Then the procedure goes to step S203.

At step S203, the processor 14 can calculate the temperature T of the heating element 12. Then the procedure goes to step S204.

At step S204, the processor 14 can compare the temperature T of the heating element 12 with the desired target temperature T_{D}. If the temperature T of the heating element 12 is greater than the desired target temperature T_{D}, the procedure goes to step S205. If the temperature T of the heating element 12 is less than the desired target temperature T_{D}, the procedure goes to step S207.

At step S205, the processor 14 can control the power supply 11 to reduce the output voltage / the output power to the heating element 12. Then the procedure goes to step S206.

At step S206, the heating element 12 can work for a period at the adjusted output voltage / the adjusted output power, then the procedure goes to step S202, and repeats the subsequent processing. In the illustrated embodiment, the period can be one second.

At step S207, the processor 14 can determine whether the output voltage / the output power from the power supply 11 to the heating element 12 reaches a maximum output voltage / output power. If the output voltage / the output power from the power supply 11 to the heating element 12 reaches the maximum output voltage / output power, the procedure goes to step S208. If the output voltage / the output power from the power supply 11 to the heating element 12 has not yet reached the maximum output voltage / output power, the procedure goes to step S209.

At step S208, the processor 14 can control the power supply 11 to maintain the output voltage / the output power to the heating element 12. Then the procedure goes to step S206.

At step S209, the processor 14 can control the power supply 11 to increase the output voltage / the output power to the heating element 12. Then the procedure goes to step S206.

In other embodiments, if the processor 14 detects that no desired target temperature T_{D} is inputted from the user, the steps of the electronic cigarette temperature control method of the second embodiment can be the same as the electronic cigarette temperature control method of the first embodiment.

In other embodiments, the electronic cigarette temperature control system 200 can further include a display. The display can be configured to display information about work state of the electronic cigarette, such as, a temperature T of the heating element, a battery power, a work voltage, an output power, or the like.

### The third embodiment:

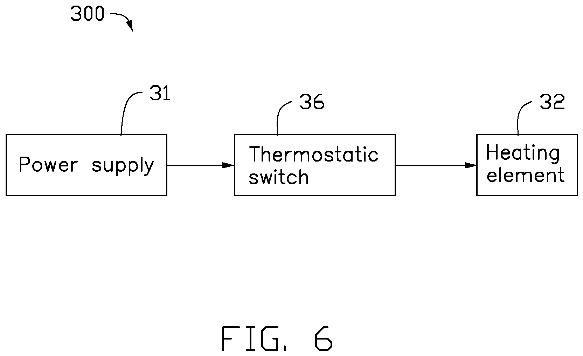

Referring to FIG. 6, a third embodiment of the electronic cigarette temperature control system 300 of the present disclosure is illustrated. The electronic cigarette temperature control system 300 can include a power supply 31, a thermostatic switch 36, and a heating element 32 coupled in sequence. The heating element 32 can heat smoke liquid, wax, or tobacco, causing a user to experience a simulation of tobacco smoking after the power supply 31 supplies power to the heating element 32.

The thermostatic switch 36 can turn on a connection between the power supply 31 and the heating element 32 or turn off the connection between the power supply 31 and the heating element 32 in the role of temperature. The temperature tₛ of the thermostatic switch 36 can increase when the temperature T of the heating element 32 increases. When the temperature tₛ of the thermostatic switch 36 is less than a switch temperature T_{M} of the thermostatic switch 36, the thermostatic switch 36 can turn on the connection between the power supply 31 and the heating element 32. The heating element 32 can work normally. Thus, the temperature T of the heating element 32 can increase and the temperature tₛ of the thermostatic switch 36 can increase accordingly. When the temperature tₛ of the thermostatic switch 36 is greater than the switch temperature T_{M} of the thermostatic switch 36, the thermostatic switch 36 can turn off the connection between the power supply 31 and the heating element 32. The heating element 32 can stop working. Thus, the temperature T of the heating element 32 can naturally decrease and the temperature tₛ of the thermostatic switch 36 can decrease accordingly until that the temperature tₛ of the thermostatic switch 36 is less than the switch temperature T_{M} of the thermostatic switch 36. When the temperature tₛ of the thermostatic switch 36 is less than the switch temperature T_{M} of the thermostatic switch 36, the thermostatic switch 36 can turn on the connection between the power supply 31 and the heating element 32 again, thus the heating element 32 can work normally again.

The thermostatic switch 36 can be arranged in the electronic cigarette. Preferably, the thermostatic switch 36 can be arranged to be adjacent to the heating element 32. Considering that the temperature tₛ of the thermostatic switch 36 is slightly less than the temperature T of the heating element 32, preferably, the switching temperature T_{M} of the thermostatic switch 36 is slightly less than the upper threshold of the operating temperature T_{H}. The thermostatic switch 36 can be selected from one of a group consisting of a mechanical thermostat switch, an electronic thermostat switch, a temperature relay, and any combination thereof. The mechanical thermostat switch can be a vapor pressure thermostat switch, a liquid expansion thermostat switch, a gas adsorption thermostat switch, or a metal expansion thermostat switch. The metal expansion thermostat switch can be a bimetal switch or a memory alloy actuated heat switch. The electronic thermostat switch can be a resistance thermostat switch or a thermocouple thermostat switch. The temperature relay can be a thermal reed relay.

In other embodiments, the electronic cigarette temperature control system 300 can further include a display. The display can be configured to display information about work state of the electronic cigarette, such as, a temperature T of the heating element, a battery power, a work voltage, an output power, or the like.

### The fourth embodiment:

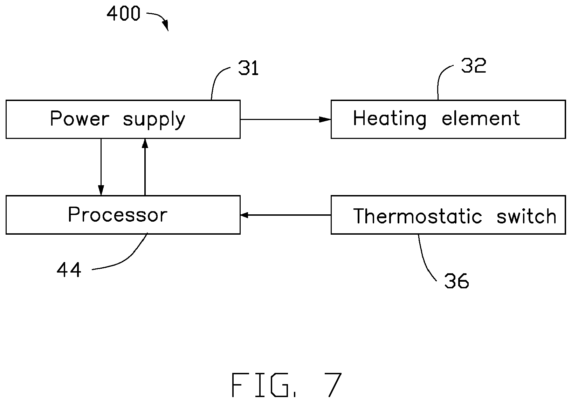

Referring to FIG. 7, a fourth embodiment of the electronic cigarette temperature control system 400 of the present disclosure is illustrated. The electronic cigarette temperature control system 400 of the fourth embodiment can be similar to the electronic cigarette temperature control system 300 of the third embodiment, except that:

In the fourth embodiment, the electronic cigarette temperature control system 400 can include a processor 44. The thermostatic switch 36 can be electrically coupled to the processor 44. The thermostatic switch 36 cannot control the connection between the power supply 31 and the heating element 32 directly. The processor 44 can control the output voltage / the output power from the power supply 31 to the heating element 32 after the processor 44 judges according to an on or off state of the thermostatic switch 36.

The temperature tₛ of the thermostatic switch 36 can increase when the temperature T of the heating element 32 increases. When the temperature tₛ of the thermostatic switch 36 is less than a switch temperature T_{M} of the thermostatic switch 36, the thermostatic switch 36 can perform action A. When the temperature tₛ of the thermostatic switch 36 is greater than a switch temperature T_{M} of the thermostatic switch 36, the thermostatic switch 36 can perform action B. The processor 44 can detect the action of the thermostatic switch 36, and control the output voltage / the output power from the power supply 41 to the heating element 32 according to the different action of the thermostatic switch 36. The action A can be the thermostatic switch 36 turn on and the action B can be the thermostatic switch 36 turn off. In other embodiments, the action A can be the thermostatic switch 36 turn off and the action B can be the thermostatic switch 36 turn on.

The electronic cigarette temperature control system 400 has the following beneficial effects:
(1) The electronic cigarette temperature control system 400 can employ the following thermostatic switch 36: the thermostatic switch 36 can turn on when the temperature tₛ of the thermostatic switch 36 is less than the switch temperature T_{M} of the thermostatic switch 36, the thermostatic switch 36 can turn off when the temperature tₛ of the thermostatic switch 36 is greater than the switch temperature T_{M} of the thermostatic switch 36. Or the thermostatic switch 36 can turn off when the temperature tₛ of the thermostatic switch 36 is less than the switch temperature T_{M} of the thermostatic switch 36, the thermostatic switch 36 can turn on when the temperature tₛ of the thermostatic switch 36 is greater than the switch temperature T_{M} of the thermostatic switch 36.
(2) The processor 44 can adjust the output voltage / the output power from the power supply 31, thus the fluctuation of the temperature T is small, thereby helping to maintain a good taste. Thus, the heating element 32 can avoid immediately stopping working when the temperature of the heating element 32 is too high, thereby avoiding the temperature T of the heating element 32 falling too fast and avoiding effecting the experience of the user.

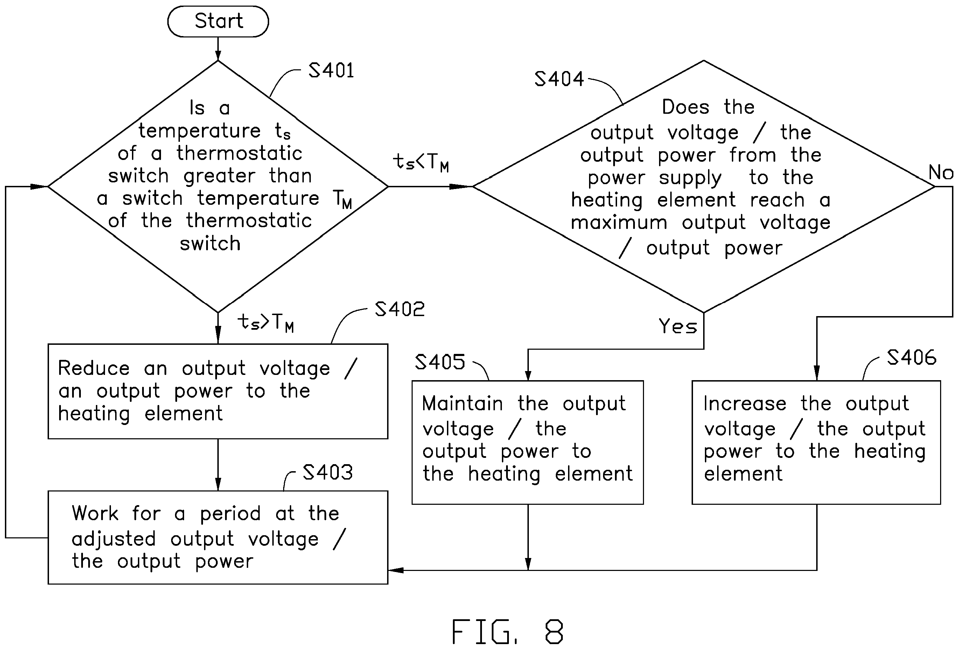

Referring to FIG. 8, the electronic cigarette temperature control system 400 of the invention includes the following steps in operation:

At step S401, the processor 44 can determine a relationship between the temperature tₛ of the thermostatic switch 36 and a switch temperature T_{M} of the thermostatic switch 36 according to the action of the thermostatic switch 36. When the temperature tₛ of the thermostatic switch 36 is greater than the switch temperature T_{M} of the thermostatic switch 36, the procedure goes to step S402. When the temperature tₛ of the thermostatic switch 36 is less than the switch temperature T_{M} of the thermostatic switch 36, the procedure goes to step S404.

At step S402, the processor 44 can control the power supply 31 to reduce the output voltage / the output power to the heating element 32. Then the procedure goes to step S403.

At step S403, the heating element 32 can work for a period at the adjusted output voltage / the adjusted output power. Then, the procedure goes to step S401, and repeats the subsequent processing. In the illustrated embodiment, the period can be one second.

At step S404, the processor 44 can determine whether the output voltage / the output power from the power supply 31 to the heating element 32 reaches a maximum output voltage / output power. If the output voltage / the output power from the power supply 31 to the heating element 32 reaches the maximum output voltage / output power, the procedure goes to step S405. If the output voltage / the output power from the power supply 31 to the heating element 32 doesn't reach the maximum output voltage / output power, the procedure goes to step S406.

At step S405, the processor 44 can control the power supply 31 to maintain the output voltage / the output power to the heating element 32. Then the procedure goes to step S403.

At step S406, the processor 44 can control the power supply 31 to increase the output voltage / the output power to the heating element 32. Then the procedure goes to step S403.

In other embodiments, the electronic cigarette temperature control system 400 can further include a display. The display can be configured to display information about work state of the electronic cigarette, such as, a temperature T of the heating element, a battery power, a work voltage, an output power, or the like.

### The fifth embodiment:

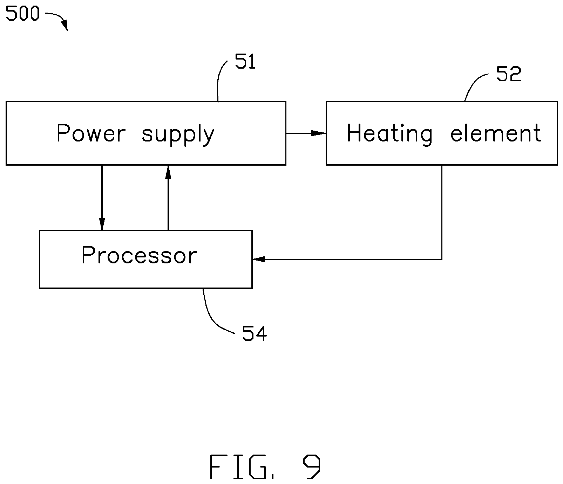

Referring to FIG. 9, a fifth embodiment of the electronic cigarette temperature control system 500 of the present disclosure is illustrated. The electronic cigarette temperature control system 500 can include a power supply 51, a heating element 52, and a processor 54. The power supply 51 can be electrically coupled to the heating element 52 and the processor 54. The heating element 52 can be electrically coupled to the processor 54. The heating element 52 can heat smoke liquid, wax, or tobacco, causing a user to experience a simulation of tobacco smoking after the power supply 51 supplies power to the heating element 52.

The heating element 52 can act as the heating element and the temperature detection element. The heating element 52 has temperature coefficient of resistance characteristics wherein the resistance value R_{L} of the heating element 52 increases with the increasing of the temperature T of the heating element 52. The heating element 52 can be made of material selected from one of a group consisting of platinum, copper, nickel, titanium, iron, ceramic-based PTC materials, polymer-based PTC materials, and any combination thereof.

The processor 54 can pre-store an upper threshold of the operating temperature T_{H}, a lower threshold of the operating temperature T_{L}, and a relationship between the resistance value R_{L} of the heating element 52 and the temperature T of the heating element 52. The processor 54 can determine the temperature T of the heating element 52 according to the resistance value R_{L} of the heating element 52. The processor 54 can further compare the temperature T of the heating element 52 with the upper threshold of the operating temperature T_{H} and the lower threshold of the operating temperature T_{L}, and control the output voltage / the output power from the power supply 51 to the heating element 52 accordingly.

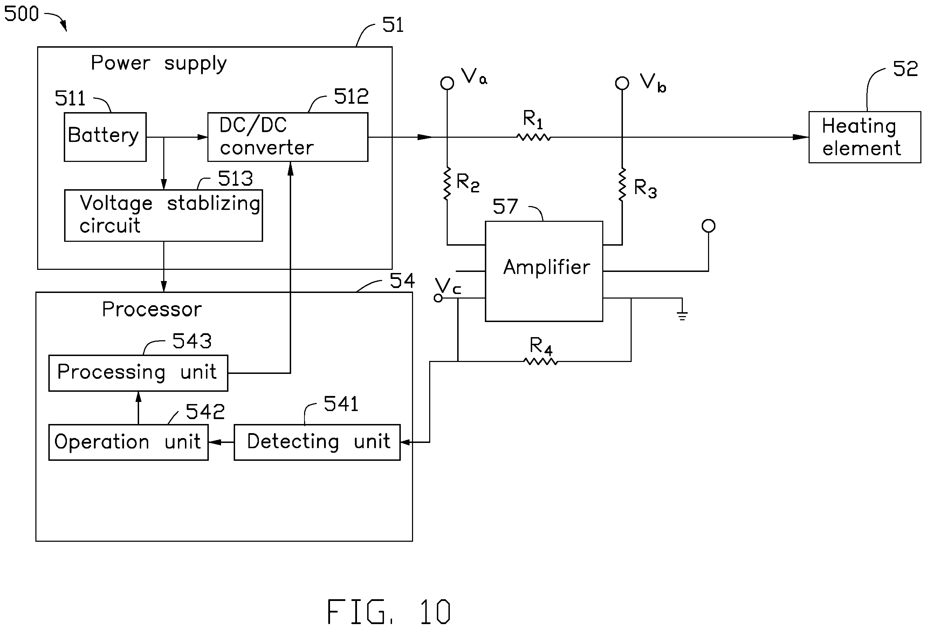

Referring to FIG. 10, in detail, the power supply 51 can include a battery 511, a DC/DC converter 512, and a voltage-stabilizing circuit 513. The battery 511 can be electrically coupled to the DC/DC converter 512 and the voltage-stabilizing circuit 513. The battery 511 can be charged with sufficient energy to power the DC/DC converter 512 and the voltage-stabilizing circuit 513. The voltage-stabilizing circuit 513 can be electrically coupled to the processor 54. The voltage-stabilizing circuit 513 can output a constant voltage to the processor 54. In the illustrated embodiment, the battery 511 can be a lithium-ion battery. It will be appreciated that, in other embodiments, the DC/DC converter 512 and the voltage-stabilizing circuit 513 can be omitted, or be replaced by other circuits.

Furthermore, the electronic cigarette temperature control system 500 can further include a first fixed resistor R₁. The first fixed resistor R₁ can be arranged between the power supply 51 and the heating element 52. The first fixed resistor R₁ can be configured to auxiliarily calculate the resistance value R_{L} of the heating element 52. In the illustrated embodiment, the first fixed resistor R₁ can be arranged between the DC/DC converter 512 and the heating element 52. The DC/DC converter 512 can be controlled by the processor 54 to provide a constant voltage Vₐ to the first fixed resistor R₁ and the heating element 52. The voltage drop across the heating element 52 can be V_{b}. Thus, the current flowing through the heating element 52 can be (Vₐ ― V_{b}) / R₁, and the resistance value R_{L} of the heating element 52 can be R₁ ∗ V_{b} / (Vₐ ― V_{b}).

Furthermore, when the resistance value of the first fixed resistor R₁ is small, the voltage drop (Vₐ ― V_{b}) across the first fixed resistor R₁ can be according small and can be difficult to measure. If the resistance value of the first fixed resistor R₁ is increased, the voltage drop V_{b} across the heating element 52 can be reduced, thus the output power from the heating element 52 can be reduced. For conveniently measuring the voltage drop (Vₐ ― V_{b}) across the first fixed resistor R₁, the electronic cigarette temperature control system 500 can further include a second fixed resistor R₂, an amplifier 57, a third fixed resistor R₃, and a fourth fixed resistor R₄. The first fixed resistor R₁ can be coupled in parallel to a series connection of the second fixed resistor R₂, the amplifier 57, the third fixed resistor R₃. The fourth fixed resistor R₄ can be coupled with the amplifier 57 in parallel. The voltage drop across the first fixed resistor R₁ can be (Vₐ ― V_{b}) = V_{c} ^{∗} R₂ / R₄ based on the characteristic parameter of the amplifier 57. In the illustrated embodiment, the amplifier 57 can be a LT6105 chip. It will be appreciated that, the connection between the second fixed resistor R₂, the third fixed resistor R₃, and the fourth fixed resistor R₄ can be different according to the different amplifier 57, at least one of the second fixed resistor R₂, the third fixed resistor R₃, and the fourth fixed resistor R₄ may be omitted, or other electronic components may be added.

In detail, the processor 54 can include a detecting unit 541, an operation unit 542, and a processing unit 543 coupled in sequence. The detecting unit 541 can be electrically coupled to the fourth fixed resistor R₄. The detecting unit 541 can be configured to detect the voltage drop V_{c} across the fourth fixed resistor R₄ and output the voltage drop V_{c} to the operation unit 542. The operation unit 542 can pre-store a third formula, a fourth formula, and a relationship between the resistance value R_{L} of the heating element 52 and the temperature T of the heating element 52. The third formula can be (Vₐ ― V_{b}) = V_{c} ^{∗} R₂ / R₄. The fourth formula can be R_{L} = R₁ ^{∗} V_{b} / (Vₐ ― V_{b}). The operation unit 542 can calculate the voltage drop (Vₐ ― V_{b}) across the first fixed resistor R₁ according to the third formula based on characteristic parameter of the amplifier 57, and calculate the resistance value R_{L} of the heating element 52 according to the fourth formula. The operation unit 542 can further determine the temperature T of the heating element 52 according to the pre-stored relationship between the resistance value R_{L} of the heating element 52 and the temperature T of the heating element 52, and output the temperature T of the heating element 52 to the processing unit 543. The processing unit 543 can compare the temperature T of the heating element 52 with the pre-store upper threshold of the operating temperature T_{H} and the lower threshold of the operating temperature T_{L}, and control the output voltage / the output power from the DC/DC converter 512 to the heating element 52 accordingly.

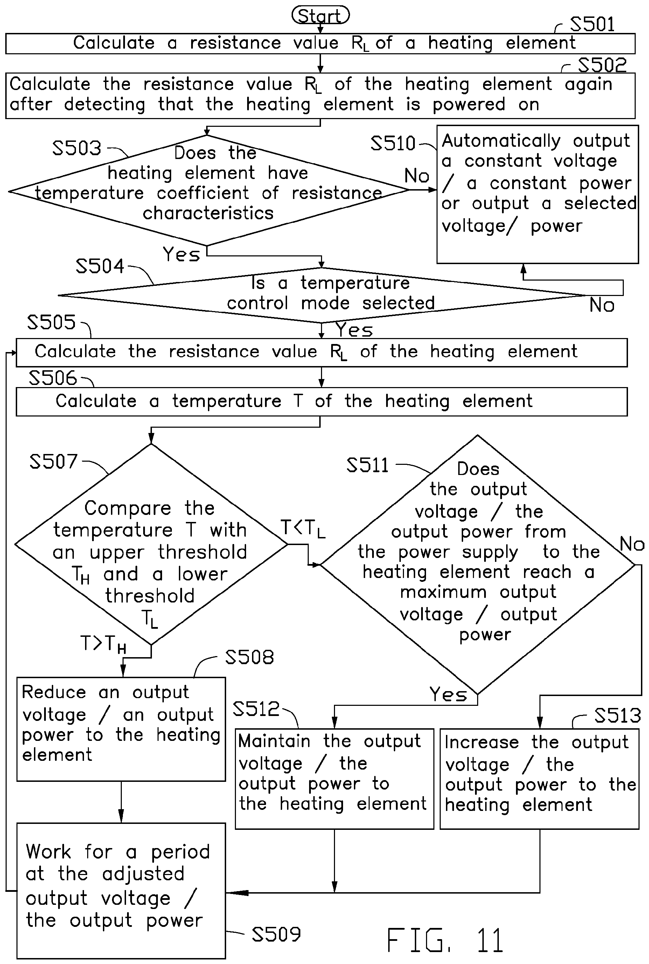

Referring to FIG. 11, the electronic cigarette temperature control system 500 of the invention includes the following steps in operation:

At step S501, the processor 54 can calculate the resistance value R_{L} of the heating element 52 before the heating element 52 is powered on. Then the procedure goes to step S502.

At step S502, the processor 54 can calculate the resistance value R_{L} of the heating element 52 again after the processor 54 detects that the heating element 52 is powered on. Then the procedure goes to step S503.

At step S503, the processor 54 can determine whether the heating element 52 has temperature coefficient of resistance characteristics according to the resistance value R_{L} calculated at step S501 and the resistance value R_{L} calculated at step S502. If a difference between the resistance value R_{L} calculated at step S501 and the resistance value R_{L} calculated at step S502 is out of a preset range, the heating element 52 can have temperature coefficient of resistance characteristics, the procedure goes to step S504. If the difference between the resistance value R_{L} calculated at step S501 and the resistance value R_{L} calculated at step S502 is no significant or is in the preset range, the heating element 52 doesn't have temperature coefficient of resistance characteristics, the procedure goes to step S510.

At step S504, the processor 54 can determine whether a temperature control mode is selected. If the processor 54 determines that the temperature control mode is selected, the procedure goes to step S505. If the processor 54 determines that the temperature control mode is not selected, the procedure goes to step S510.

At step S505, the processor 54 can calculate the resistance value R_{L} of the heating element 52. Then the procedure goes to step S506.

At step S506, the processor 54 can calculate the temperature T of the heating element 52 according to the resistance value R_{L} of the heating element 52. Then the procedure goes to step S507.

At step S507, the processor 54 can compare the temperature T of the heating element 52 with the upper threshold of the operating temperature T_{H} and the lower threshold of the operating temperature T_{L}. If the temperature T of the heating element 52 is greater than the upper threshold of the operating temperature T_{H}, the procedure goes to step S508. If the temperature T of the heating element 52 is less than the lower threshold of the operating temperature T_{L}, the procedure goes to step S511.

At step S508, the processor 54 can control the power supply 51 to reduce the output voltage / the output power to the heating element 52. Then the procedure goes to step S509.

At step S509, the heating element 52 can work for a period at the adjusted output voltage / the adjusted output power. Then, the procedure goes to step S505, and repeats the subsequent processing. In the illustrated embodiment, the period can be one second.

At step S510, the processor 54 can automatically control the power supply 51 to output a constant voltage / a constant power to the heating element 52, or the processor 54 can control the power supply 51 to output a selected voltage/ a selected output power to the heating element 52.

At step S511, the processor 54 can determine whether the output voltage / the output power from the power supply 51 to the heating element 52 reaches a maximum output voltage / output power. If the output voltage / the output power from the power supply 51 to the heating element 52 reaches the maximum output voltage / output power, the procedure goes to step S512. If the output voltage / the output power from the power supply 51 to the heating element 52 doesn't reach the maximum output voltage / output power, the procedure goes to step S513.

At step S512, the processor 54 can control the power supply 51 to maintain the output voltage / the output power to the heating element 52. Then the procedure goes to step S509.

At step S513, the processor 54 can control the power supply 51 to increase the output voltage / the output power to the heating element 52. Then the procedure goes to step S509.

In other embodiments, the electronic cigarette temperature control system 500 can further include a display. The display can be configured to display information about work state of the electronic cigarette, such as, a temperature T of the heating element, a battery power, a work voltage, an output power, or the like.

### The sixth embodiment:

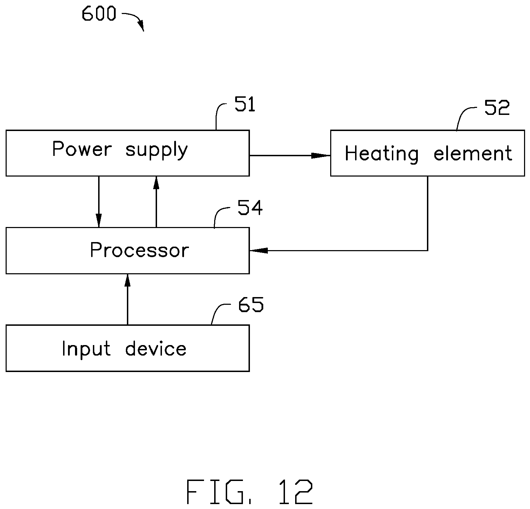

Referring to FIG. 12, a sixth embodiment of the electronic cigarette temperature control system 600 of the present disclosure is illustrated. The electronic cigarette temperature control system 600 of the sixth embodiment can be similar to the electronic cigarette temperature control system 500 of the fifth embodiment, except that:

The electronic cigarette temperature control system 600 can further include an input device 65 electrically coupled to the processor 54. The user can input a desired target temperature T_{D} via the input device 65. The desired target temperature T_{D} is greater than or equal to the lower threshold of the operating temperature T_{L} and is less than or equal to the upper threshold of the operating temperature T_{H}. The heating element 52 can be controlled by the processor 54 to maintain to work at a temperature T_{D} ± Δt'. Where Δt' represents a temperature deviation generated by a certain lag of a response time of the power supply 51, the heating unit 52, and the processor 54.

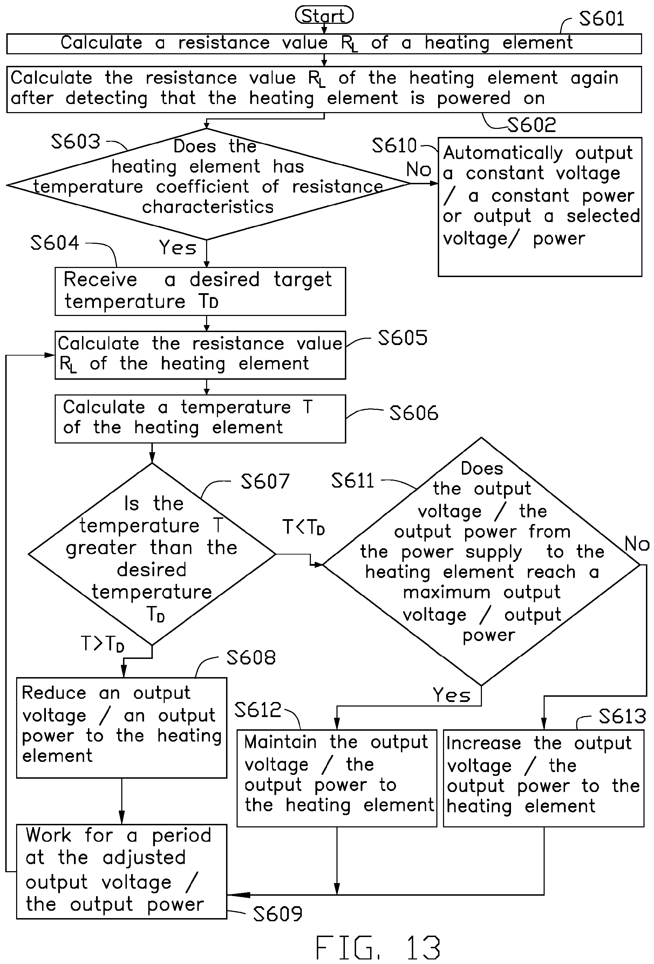

Referring to FIGs. 13, the electronic cigarette temperature control system 600 of the invention includes the following steps in operation:

At step S601, the processor 54 can calculate the resistance value R_{L} of the heating element 52 before the heating element 52 is powered on. Then the procedure goes to step S602.

At step S602, the processor 54 can calculate the resistance value R_{L} of the heating element 52 again after the processor 54 detects that the heating element 52 is powered on. Then the procedure goes to step S603.

At step S603, the processor 54 can determine whether the heating element 52 has temperature coefficient of resistance characteristics according to the resistance value R_{L} calculated at step S601 and the resistance value R_{L} calculated at step S602. If a difference between the resistance value R_{L} calculated at step S601 and the resistance value R_{L} calculated at step S602 is out of a preset range, the heating element 52 has temperature coefficient of resistance characteristics, the procedure goes to step S604. If the difference between the resistance value R_{L} calculated at step S601 and the resistance value R_{L} calculated at step S602 is no significant or is in a preset range, the heating element 52 doesn't have temperature coefficient of resistance characteristics, the procedure goes to step S610.

At step S604, the processor 54 can receive a desired target temperature T_{D} (T_{L}≤T_{D}≤T_{H}) inputted from the user via the input device 65. Then the procedure goes to step S605.

At step S605, the processor 54 can calculate the resistance value R_{L} of the heating element 52. Then the procedure goes to step S606.

At step S606, the processor 54 can calculate the temperature T of the heating element 52 according to the resistance value R_{L} of the heating element 52. Then the procedure goes to step S607.

At step S607, the processor 54 can compare the temperature T of the heating element 52 with the desired temperature T_{D}. If the temperature T of the heating element 52 is greater than the desired temperature T_{D}, the procedure goes to step S608. If the temperature T of the heating element 52 is less than the desired temperature T_{D}, the procedure goes to step S611.

At step S608, the processor 54 can control the power supply 51 to reduce the output voltage / the output power to the heating element 52. Then the procedure goes to step S609.

At step S609, the heating element 52 can work for a period at the adjusted output voltage / the adjusted output power. Then, the procedure goes to step S605, and repeats the subsequent processing. In the illustrated embodiment, the period can be one second.

At step S610, the processor 54 can automatically control the power supply 51 to output a constant voltage / a constant power to the heating element 52, or the processor 54 can control the power supply 51 to output a selected voltage/ a selected power to the heating element 52.

At step S611, the processor 54 can determine whether the output voltage / the output power from the power supply 51 to the heating element 52 reaches a maximum output voltage / output power. If the output voltage / the output power from the power supply 51 to the heating element 52 reaches the maximum output voltage / output power, the procedure goes to step S612. If the output voltage / the output power from the power supply 51 to the heating element 52 doesn't reach the maximum output voltage / output power, the procedure goes to step S613.

At step S612, the processor 54 can control the power supply 51 to maintain the output voltage / the output power to the heating element 52. Then the procedure goes to step S609.

At step S613, the processor 54 can control the power supply 51 to increase the output voltage / the output power to the heating element 52. Then the procedure goes to step S609.

In other embodiments, if the processor 54 detect that no desired target temperature T_{D} is inputted from the user, the steps of the electronic cigarette temperature control method of the sixth embodiment can be the same as the electronic cigarette temperature control method of the fifth embodiment.

In other embodiments, the electronic cigarette temperature control system 600 can further include a display. The display can be configured to display information about work state of the electronic cigarette, such as, a temperature T of the heating element, a battery power, a work voltage, an output power, or the like.

### The seventh embodiment:

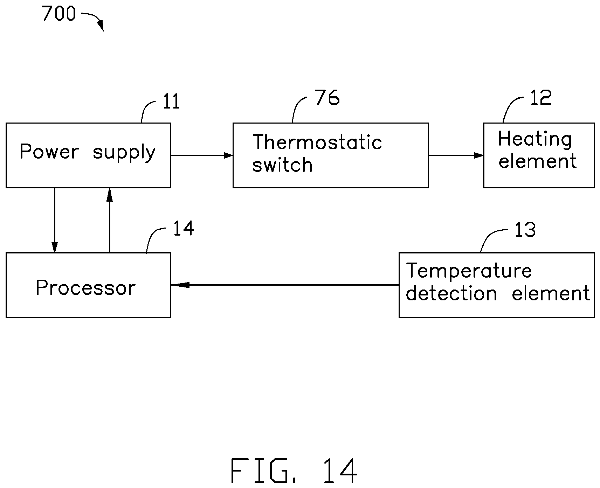

Referring to FIG. 14, a seventh embodiment of the electronic cigarette temperature control system 700 of the present disclosure is illustrated. The electronic cigarette temperature control system 700 of the seventh embodiment can be similar to the electronic cigarette temperature control system 100 of the first embodiment, except that:

In the seventh embodiment, the electronic cigarette temperature control system 700 can further include a thermostatic switch 76 coupled between the power supply 11 and the heating element 12. The thermostatic switch 76 can turn on a connection between the power supply 11 and the heating element 12 or turn off the connection between the power supply 11 and the heating element 12 at a role of temperature. The thermostatic switch 76 can be arranged in the electronic cigarette. Preferably, the thermostatic switch 76 can be arranged to be adjacent to the heating element 12. Considering that the temperature tₛ of the thermostatic switch 76 is slightly less than the temperature T of the heating element 12, preferably, the switching temperature T_{M} of the thermostatic switch 76 is slightly less than the upper threshold of the operating temperature T_{H}. The thermostatic switch 76 can be selected from one of a group consisting of a mechanical thermostat switch, an electronic thermostat switch, a temperature relay, and any combination thereof. The mechanical thermostat switch can be a vapor pressure thermostat switch, a liquid expansion thermostat switch, a gas adsorption thermostat switch, or a metal expansion thermostat switch. The metal expansion thermostat switch can be a bimetal switch or a memory alloy actuated heat switch. The electronic thermostat switch can be a resistance thermostat switch or a thermocouple thermostat switch. The temperature relay can be a thermal reed relay.

When the temperature tₛ of the thermostatic switch 76 is less than the switching temperature T_{M} of the thermostatic switch 76, the steps of the electronic cigarette temperature control method carried out using the configurations of the electronic cigarette temperature control system 700 illustrated in FIG. 14 can be the same as the steps of the electronic cigarette temperature control method carried out using the configurations of the electronic cigarette temperature control system 100 of the first embodiment, thereby doesn't described again herein. When the temperature tₛ of the thermostatic switch 76 is greater than the switching temperature T_{M} of the thermostatic switch 76, the thermostatic switch 76 can turn off. The power supply 11 can stop powering the heating element 12. The temperature T of the heating element 12 can according naturally decrease and the temperature tₛ of the thermostatic switch 76 can decrease accordingly until that the temperature tₛ of the thermostatic switch 76 is less than the switch temperature T_{M} of the thermostatic switch 76. When the temperature tₛ of the thermostatic switch 76 is less than the switch temperature T_{M} of the thermostatic switch 76, the thermostatic switch 76 can turn on the connection between the power supply 11 and the heating element 12 again, thus the heating element 12 can work normally again as the first embodiment. Thus, the electronic cigarette can execute a double temperature control protection, especially when the temperature detection element 13 and/or the processor 14 is malfunctioned, the electronic cigarette can still control the temperature of heating element 12.

In other embodiments, the second embodiment can be varied with reference to the seventh embodiment, namely, the electronic cigarette temperature control system 200 can further include a thermostatic switch coupled between the power supply 21 and the heating element 22, thereby executing a double temperature control protection.

In other embodiments, the fifth embodiment and the sixth embodiment can be varied with reference to the seventh embodiment: the electronic cigarette temperature control system can further include a thermostatic switch coupled between the power supply and the heating element. When the heating element has temperature coefficient of resistance characteristics, the electronic cigarette of the fifth embodiment and the sixth embodiment can execute a double temperature control protection. When the heating element doesn't have temperature coefficient of resistance characteristics, the steps of the electronic cigarette temperature control method carried out using the configurations of the electronic cigarette temperature control system of the fifth embodiment and the sixth embodiment can be the same as the steps of the electronic cigarette temperature control method carried out using the configurations of the electronic cigarette temperature control system of the third embodiments, thereby doesn't described again herein.

### The eighth embodiment:

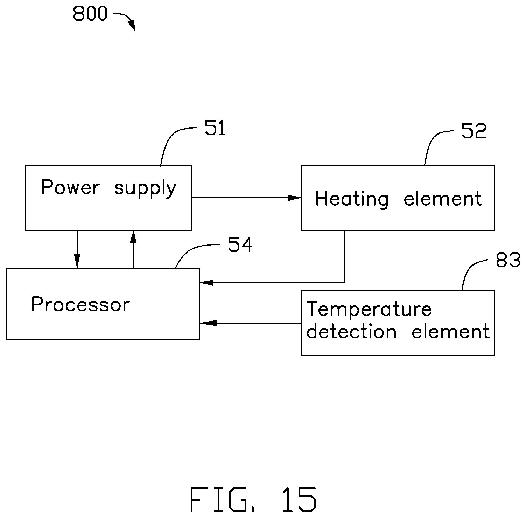

Referring to FIG. 15, an eighth embodiment of the electronic cigarette temperature control system 800 of the present disclosure is illustrated. The electronic cigarette temperature control system 800 of the eighth embodiment can be similar to the electronic cigarette temperature control system 500 of the fifth embodiment, except that:

The electronic cigarette temperature control system 800 can further include a temperature detection element 83 electrically coupled to the processor 54. When the heating element 52 has temperature coefficient of resistance characteristics, the electronic cigarette of the eighth embodiment can execute a temperature control as the fifth embodiment. When the heating element 52 doesn't have temperature coefficient of resistance characteristics, the electronic cigarette of the eighth embodiment can execute a temperature control as the first embodiment. Alternatively, the electronic cigarette temperature control system 800 can further include a thermostatic switch electrically coupled to the processor. When the heating element 52 doesn't have temperature coefficient of resistance characteristics, the electronic cigarette temperature control system 800 of the eighth embodiment can execute a temperature control as the fourth embodiment.

The electronic cigarette temperature control system 800 can have the following beneficial effect:

When the user employs the heating element of the atomizer assembly portion which has temperature coefficient of resistance characteristics, the electronic cigarette of the eighth embodiment can execute a temperature control as the fifth embodiment. When the user employs the heating element of the atomizer assembly portion which doesn't have temperature coefficient of resistance characteristics, the electronic cigarette of the eighth embodiment can execute a temperature control as the first embodiment. When the user employs the heating element of the atomizer assembly portion which doesn't have temperature coefficient of resistance characteristics and the temperature detection element 83 is replaced by a thermostatic switch, the electronic cigarette of the eighth embodiment can execute a temperature control as the fourth embodiment. Thus, the versatility of the electronic cigarette temperature control system and the electronic cigarette can increase.

Furthermore, the electronic cigarette temperature control system can further include a thermostatic switch coupled between the power supply 51 and the heating element 52 for executing a double temperature control protection. Especially, when the temperature detection element 83 and/or the processor 54 is malfunctioned, the electronic cigarette can still control the temperature of the heating element 52.

### The ninth embodiment:

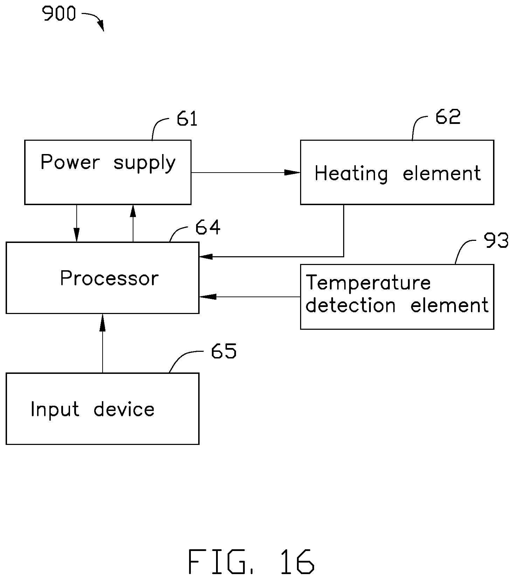

Referring to FIG. 16, a ninth embodiment of the electronic cigarette temperature control system 900 of the present disclosure is illustrated. The electronic cigarette temperature control system 900 of the ninth embodiment can be similar to the electronic cigarette temperature control system 600 of the sixth embodiment, except that:

The electronic cigarette temperature control system 900 can further include a temperature detection element 93 electrically coupled to the processor 64. When the heating element 62 has temperature coefficient of resistance characteristics, the heating element 62 of the electronic cigarette temperature control system 900 of the ninth embodiment can be maintained to work at the temperature T_{D}± Δt' as the sixth embodiment. When the heating element 62 doesn't have temperature coefficient of resistance characteristics, the heating element 62 of the electronic cigarette temperature control system 900 of the ninth embodiment can be maintained to work at the temperature T_{D}± Δt' as the second embodiment.

In other embodiments, the electronic cigarette temperature control system 900 can further include a thermostatic switch coupled between the power supply 61 and the heating element 62, thereby executing a double temperature control protection.

### The tenth embodiment:

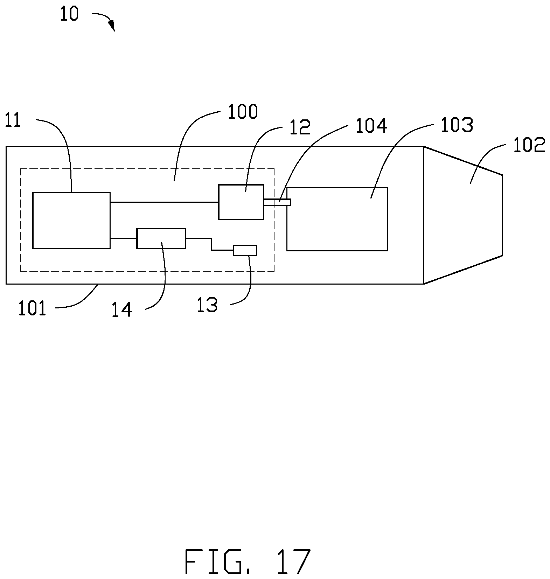

Referring to FIG. 17, an electronic cigarette 10 of the present disclosure is illustrated. The electronic cigarette 10 can include a housing 101, a mouthpiece 102, a liquid tank 103, a liquid guiding component 104, and an electronic cigarette temperature control system 100. The electronic cigarette temperature control system 100 can have a liquid communication with the liquid tank 103 via the the liquid guiding component 104. The electronic cigarette temperature control system 100 can heat smoke liquid to generate vapor, and control the temperature of the heating element 12 within a reasonable range.

It will be appreciated that, the electronic cigarette temperature control system 100 can be replaced by any one from the electronic cigarette temperature control systems (200, 3000, 400, 500, 600, 700, 800, 900) of the second embodiment to the ninth embodiment, or replaced by the electronic cigarette temperature control system modified from the electronic cigarette temperature control system (100, 200, 3000, 400, 500, 600, 700, 800, 900) of the first embodiment to the ninth embodiment.

It will be appreciated that, any one from the electronic cigarette temperature control systems of the first embodiment to the ninth embodiment can be applied in any electronic cigarette, but is not limited to the liquid guiding manner, the atomization manner, the types of the aerosol formation matrix (for example, smoke liquid, or wax or tobacco), the heating manner, and the likes. And any one from the electronic cigarette temperature control system modified from the electronic cigarette temperature control system of the first embodiment to the ninth embodiment can be applied in the any electronic cigarette, but is not limited to the liquid guiding manner, the atomization manner, the types of the aerosol formation matrix (for example, smoke liquid, or wax or tobacco), the heating manner, and the like.

## Claims

1. An electronic cigarette temperature control system (100, 200, 300, 400, 500, 600, 700, 800, 900) comprising a power supply (11, 31, 51), a heating element (12, 32, 52), a temperature detection element (13, 83, 93), and a processor (14, 44, 54), the power supply (11, 31, 51) is electrically coupled to the heating element (12, 32, 52) and the processor (14, 44, 54); the temperature detection element (13, 83, 93) is electrically coupled to the processor (14, 44, 54), which is configured to detect a change of a temperature T of the heating element (12, 32, 52), and output the change of the temperature T of the heating element (12, 32, 52) to the processor (14, 44, 54); the electronic cigarette temperature control system (100, 200, 300, 400, 500, 600, 700, 800, 900) being **characterized in that** the processor (14, 44, 54) is configured to:
determine whether the heating element (12, 32, 52) has temperature coefficient of resistance characteristics according to the resistance value R_{L} of the heating element (12, 32, 52) before the heating element (12, 32, 52) is powered on and the resistance value R_{L} of the heating element (12, 32, 52) after the processor (14, 44, 54) detects that the heating element (12, 32, 52) is powered on;
determine a temperature t of the temperature detection element (13, 83, 93) according to an associated physical quantity x of the temperature detection element (13, 83, 93), and calculate the temperature T of the heating element (12, 32, 52) according to the temperature t of the temperature detection element (13, 83, 93) if the heating element (12, 32, 52) does not have temperature coefficient of resistance characteristics;
wherein the associated physical quantity x is one of a temperature t, a resistance, a voltage, a current, a resonant frequency, an optical power, and any combination thereof;
wherein the processor (14, 44, 54) is further configured to compare the temperature T of the heating element (12, 32, 52) with a pre-stored upper threshold of an operating temperature T_{H} and a pre-stored lower threshold of the operating temperature T_{L}, and control an output voltage or an output power from the power supply (11, 31, 51) to the heating element (12, 32, 52) according to the result of the comparison.

2. The electronic cigarette temperature control system (100, 200, 300, 400, 500, 600, 700, 800, 900) as described in claim 1, wherein the temperature detection element (13, 83, 93) is selected from one of a group consisting of a positive temperature coefficient (PTC) thermistor, a negative temperature coefficient (NTC) thermistor, a bimetallic strip, a thermocouple, a quartz crystal temperature sensor, an optical fiber temperature sensor, an infrared temperature sensor, a P-N junction temperature sensor, and any combination thereof.

3. The electronic cigarette temperature control system (100, 200, 300, 400, 500, 600, 700, 800, 900) as described in claim 1, wherein the temperature detection element (13, 83, 93) is arranged to be adjacent to the heating element (12, 32, 52).

4. The electronic cigarette temperature control system (100, 200, 300, 400, 500, 600, 700, 800, 900) as described in claim 1, wherein the temperature detection element (13, 83, 93) is a PCT thermistor, and the associated physical quantity x is the resistance value R_{T} of the PTC thermistor.

5. The electronic cigarette temperature control system (100, 200, 300, 400, 500, 600, 700, 800, 900) as described in claim 4, wherein the electronic cigarette temperature control system (100, 200, 300, 400, 500, 600, 700, 800, 900) further comprises a fixed resistor R₅ coupled with the temperature detection element (13, 83, 93) in series, a voltage drop across the fixed resistor R₅ is (Vₑ - V_{f}), a current flowing through the fixed resistor R₅ is (Vₑ - V_{f}) / R₅, a voltage drop across the temperature detection element (13, 83, 93) is V_{f}, and the resistance value R_{T} of the temperature detection element (13, 83, 93) is expressed by R_{T} = R₅ * V_{f}/ (Vₑ - V_{f}).

6. The electronic cigarette temperature control system (100, 200, 300, 400, 500, 600, 700, 800, 900) as described in claim 5, wherein the processor (14, 44, 54) is electrically coupled to the at least one temperature detection element (13, 83, 93), and pre-stores a first formula: R_{T} = R₅ * V_{f} / (Vₑ - V_{f}), a relationship between the resistance value R_{T} of the at least one temperature detection element (13, 83, 93) and the temperature t of the at least one temperature detection element (13, 83, 93), and a second formula: T=t+Δt, the processor (14, 44, 54) is configured to:
detect the voltage drop V_{f} across the at least one temperature detection element (13, 83, 93);
receive the voltage drop V_{f} across the at least one temperature detection element (13, 83, 93), and calculate the temperature T of the heating element (12, 32, 52) according to the first formula, the second formula, and the relationship between the resistance value R_{T} and the temperature t of the temperature detection element (13, 83, 93);
receive the temperature T of the heating element (12, 32, 52), compare the temperature T of the heating element (12, 32, 52) with the pre-stored upper threshold of the operating temperature T_{H} and the pre-stored lower threshold of the operating temperature T_{L}, and control the output voltage or the output power from the power supply (11, 31, 51) to the heating element (12, 32, 52) according to the result of the comparison.

7. The electronic cigarette temperature control system (100, 200, 300, 400, 500, 600, 700, 800, 900) as described in claim 1, wherein the electronic cigarette temperature control system (100, 200, 300, 400, 500, 600, 700, 800, 900) further comprises a thermostatic switch (36, 76), wherein the thermostatic switch (36, 76) is coupled in series between the power supply (11, 31, 51) and the heating element (12, 32, 52), the thermostatic switch (36, 76) is configured to control the temperature of heating element (12, 32, 52) when the temperature detection element (13, 83, 93) and/or the processor (14, 44, 54) is malfunctioned.

8. An electronic cigarette (10) comprising the electronic cigarette temperature control system (100, 200, 300, 400, 500, 600, 700, 800, 900) of any one of claims 1-7.

## Patentansprüche

1. Temperatursteuerungssystem für elektronische Zigaretten (100, 200, 300, 400, 500, 600, 700, 800, 900), das eine Stromversorgung (11, 31, 51), ein Heizelement (12, 32, 52), ein Temperaturerfassungselement (13, 83, 93) und einen Prozessor (14, 44, 54) umfasst, wobei die Stromversorgung (11, 31, 51) mit dem Heizelement (12, 32, 52) und dem Prozessor (14, 44, 54) elektrisch gekoppelt ist; das Temperaturerfassungselement (13, 83, 93) mit dem Prozessor (14, 44, 54) elektrisch gekoppelt ist, der konfiguriert ist, um eine Änderung einer Temperatur T des Heizelements (12, 32, 52) zu erfassen und die Änderung der Temperatur T des Heizelements (12, 32, 52) an den Prozessor (14, 44, 54) auszugeben; wobei das Temperatursteuerungssystem für elektronische Zigaretten (100, 200, 300, 400, 500, 600, 700, 800, 900) **dadurch gekennzeichnet ist, dass** der Prozessor (14, 44, 54) für Folgendes konfiguriert ist:
Bestimmen, ob das Heizelement (12, 32, 52) einen Temperaturkoeffizienten von Widerstandseigenschaften gemäß dem Widerstandswert R_{L} des Heizelements (12, 32, 52), bevor das Heizelement (12, 32, 52) eingeschaltet wird, und dem Widerstandswert R_{L} des Heizelements (12, 32, 52), nachdem der Prozessor (14, 44, 54) erfasst, dass das Heizelement (12, 32, 52) eingeschaltet ist, aufweist;
Bestimmen einer Temperatur t des Temperaturerfassungselements (13, 83, 93) gemäß einer zugehörigen physikalischen Größe x des Temperaturerfassungselements (13, 83, 93) und Berechnen der Temperatur T des Heizelements (12, 32, 52) gemäß der Temperatur t des Temperaturerfassungselements (13, 83, 93), falls das Heizelement (12, 32, 52) keinen Temperaturkoeffizienten von Widerstandseigenschaften aufweist;
wobei die zugehörige physikalische Größe x eine Temperatur t, ein Widerstand, eine Spannung, ein Strom, eine Resonanzfrequenz, eine optische Leistung oder eine beliebige Kombination davon ist;
wobei der Prozessor (14, 44, 54) ferner konfiguriert ist, um die Temperatur T des Heizelements (12, 32, 52) mit einem vorgespeicherten oberen Schwellenwert einer Betriebstemperatur T_{H} und einem vorgespeicherten unteren Schwellenwert der Betriebstemperatur T_{L} zu vergleichen und eine Ausgangsspannung oder eine Ausgangsleistung von der Stromversorgung (11, 31, 51) zu dem Heizelement (12, 32, 52) gemäß dem Ergebnis des Vergleichs zu steuern.

2. Temperatursteuerungssystem für elektronische Zigaretten (100, 200, 300, 400, 500, 600, 700, 800, 900) nach Anspruch 1, wobei das Temperaturerfassungselement (13, 83, 93) aus einer Gruppe ausgewählt ist, die aus Folgendem besteht: einem Thermistor mit positivem Temperaturkoeffizienten (positive temperature coefficient - PTC), einem Thermistor mit negativem Temperaturkoeffizienten (negative temperature coefficient - NTC), einem Bimetallstreifen, einem Thermoelement, einem Quarzkristall-Temperatursensor, einem Lichtleiter-Temperatursensor, einem Infrarot-Temperatursensor, einem PN-Übergangstemperatursensor und einer beliebigen Kombination davon.

3. Temperatursteuerungssystem für elektronische Zigaretten (100, 200, 300, 400, 500, 600, 700, 800, 900) nach Anspruch 1, wobei das Temperaturerfassungselement (13, 83, 93) angrenzend an das Heizelement (12, 32, 52) angeordnet ist.

4. Temperatursteuerungssystem für elektronische Zigaretten (100, 200, 300, 400, 500, 600, 700, 800, 900) nach Anspruch 1, wobei das Temperaturerfassungselement (13, 83, 93) ein PCT-Thermistor ist und die zugehörige physikalische Größe x der Widerstandswert R_{T} des PTC-Thermistors ist.

5. Temperatursteuerungssystem für elektronische Zigaretten (100, 200, 300, 400, 500, 600, 700, 800, 900) nach Anspruch 4, wobei das Temperatursteuerungssystem für elektronische Zigaretten (100, 200, 300, 400, 500, 600, 700, 800, 900) ferner einen Festwiderstand R₅ umfasst, der mit dem Temperaturerfassungselement (13, 83, 93) in Reihe geschaltet ist, wobei ein Spannungsabfall über dem Festwiderstand R₅ (Vₑ - V_{f}) ist, ein durch den Festwiderstand R₅ fließender Strom (Vₑ - V_{f}) / R₅ ist, ein Spannungsabfall über dem Temperaturerfassungselement (13, 83, 93) V_{f} ist, und der Widerstandswert R_{T} des Temperaturerfassungselements (13, 83, 93) durch R_{T} = R₅ * V_{f}/ (Vₑ - V_{f}) ausgedrückt wird.

6. Temperatursteuerungssystem für elektronische Zigaretten (100, 200, 300, 400, 500, 600, 700, 800, 900) nach Anspruch 5, wobei der Prozessor (14, 44, 54) mit dem wenigstens einen Temperaturerfassungselement (13, 83, 93) elektrisch gekoppelt ist und eine erste Formel: R_{T} = R₅ * V_{f} / (Vₑ - V_{f}), eine Beziehung zwischen dem Widerstandswert R_{T} des wenigstens einen Temperaturerfassungselements (13, 83, 93) und der Temperatur t des wenigstens einen Temperaturerfassungselements (13, 83, 93), und eine zweite Formel: T = t + Δt vorspeichert, wobei der Prozessor (14, 44, 54) für Folgendes konfiguriert ist:
Erfassen des Spannungsabfalls V_{f} über dem wenigstens einen Temperaturerfassungselement (13, 83, 93);
Empfangen des Spannungsabfalls V_{f} über dem wenigstens einen Temperaturerfassungselement (13, 83, 93) und Berechnen der Temperatur T des Heizelements (12, 32, 52) gemäß der ersten Formel, der zweiten Formel und der Beziehung zwischen dem Widerstandswert R_{T} und der Temperatur t des Temperaturerfassungselements (13, 83, 93);
Empfangen der Temperatur T des Heizelements (12, 32, 52), Vergleichen der Temperatur T des Heizelements (12, 32, 52) mit dem vorgespeicherten oberen Schwellenwert der Betriebstemperatur T_{H} und dem vorgespeicherten unteren Schwellenwert der Betriebstemperatur T_{L}, und Steuern der Ausgangsspannung oder der Ausgangsleistung von der Stromversorgung (11, 31, 51) zu dem Heizelement (12, 32, 52) gemäß dem Ergebnis des Vergleichs.

7. Temperatursteuerungssystem für elektronische Zigaretten (100, 200, 300, 400, 500, 600, 700, 800, 900) nach Anspruch 1, wobei das Temperatursteuerungssystem für elektronische Zigaretten (100, 200, 300, 400, 500, 600, 700, 800, 900) ferner einen Thermostatschalter (36, 76) umfasst, wobei der Thermostatschalter (36, 76) zwischen der Stromversorgung (11, 31, 51) und dem Heizelement (12, 32, 52) in Reihe geschaltet ist, wobei der Thermostatschalter (36, 76) konfiguriert ist, um die Temperatur des Heizelements (12, 32, 52) zu steuern, wenn das Temperaturerfassungselement (13, 83, 93) und/oder der Prozessor (14, 44, 54) eine Fehlfunktion aufweisen.

8. Elektronische Zigarette (10), die das Temperatursteuerungssystem für elektronische Zigaretten (100, 200, 300, 400, 500, 600, 700, 800, 900) nach einem der Ansprüche 1―7 umfasst.

## Revendications

1. Système de régulation de température de cigarette électronique (100, 200, 300, 400, 500, 600, 700, 800, 900) comprenant une alimentation en électricité (11, 31, 51), un élément chauffant (12, 32, 52), un élément de détection de température (13, 83, 93) et un processeur (14, 44, 54), l'alimentation en électricité (11, 31, 51) est couplée électriquement à l'élément chauffant (12, 32, 52) et au processeur (14, 44, 54) ; l'élément de détection de température (13, 83, 93) est couplé électriquement au processeur (14, 44, 54), qui est configuré pour détecter un changement de température T de l'élément chauffant (12, 32, 52), et délivrer le changement de la température T de l'élément chauffant (12, 32, 52) au processeur (14, 44, 54) ; le système de régulation de température de cigarette électronique (100, 200, 300, 400, 500, 600, 700, 800, 900) étant **caractérisé en ce que** le processeur (14, 44, 54) est configuré pour :
déterminer si l'élément chauffant (12, 32, 52) a un coefficient de température de caractéristiques de résistance en fonction de la valeur de résistance R_{L} de l'élément chauffant (12, 32, 52) avant la mise sous tension de l'élément chauffant (12, 32, 52) et de la valeur de résistance R_{L} de l'élément chauffant (12, 32, 52) après que le processeur (14, 44, 54) a détecté que l'élément chauffant (12, 32, 52) est mis sous tension ;
déterminer une température t de l'élément de détection de température (13, 83, 93) en fonction d'une quantité physique associée x de l'élément de détection de température (13, 83, 93), et calculer la température T de l'élément chauffant (12, 32, 52) en fonction de la température t de l'élément de détection de température (13, 83, 93) si l'élément chauffant (12, 32, 52) n'a pas de coefficient de température de caractéristiques de résistance ;
dans lequel la quantité physique associée x est l'une parmi une température t, une résistance, une tension, un courant, une fréquence de résonance, une puissance optique et une combinaison quelconque de ceux-ci ;
dans lequel le processeur (14, 44, 54) est en outre configuré pour comparer la température T de l'élément chauffant (12, 32, 52) avec un seuil supérieur pré-stocké d'une température de fonctionnement T_{H} et un seuil inférieur pré-stocké de la température de fonctionnement T_{L}, et contrôler une tension de sortie ou une puissance de sortie de l'alimentation en électricité (11, 31, 51) vers l'élément chauffant (12, 32, 52) en fonction du résultat de la comparaison.

2. Système de régulation de température de cigarette électronique (100, 200, 300, 400, 500, 600, 700, 800, 900) selon la revendication 1, dans lequel l'élément de détection de température (13, 83, 93) est choisi parmi l'un parmi le groupe constitué par une thermistance à coefficient de température positif (CTP), une thermistance à coefficient de température négatif (CTN), un bilame, un thermocouple, un capteur de température à cristal de quartz, un capteur de température à fibre optique, un capteur de température infrarouge, un capteur de température à jonction P-N, et une combinaison quelconque de ceux-ci.

3. Système de régulation de température de cigarette électronique (100, 200, 300, 400, 500, 600, 700, 800, 900) selon la revendication 1, dans lequel l'élément de détection de température (13, 83, 93) est agencé pour être adjacent à l'élément chauffant (12, 32, 52).

4. Système de régulation de température de cigarette électronique (100, 200, 300, 400, 500, 600, 700, 800, 900) selon la revendication 1, dans lequel l'élément de détection de température (13, 83, 93) est une thermistance CTP, et la quantité physique associée x est la valeur de résistance R_{T} de la thermistance CTP.

5. Système de régulation de température de cigarette électronique (100, 200, 300, 400, 500, 600, 700, 800, 900) selon la revendication 4, dans lequel le système de régulation de température de cigarette électronique (100, 200, 300, 400, 500, 600, 700, 800, 900) comprend en outre une résistance fixe R₅ couplée à l'élément de détection de température (13, 83, 93) en série, une chute de tension aux bornes de la résistance fixe R₅ est (Vₑ - V_{f}), un courant circulant à travers la résistance fixe R₅ est (Vₑ - V_{f})/R₅, une chute de tension aux bornes de l'élément de détection de température (13, 83, 93) est V_{f} et la valeur de résistance R_{T} de l'élément de détection de température (13, 83, 93) est exprimée par R_{T} = R₅ * V_{f}/(Vₑ - V_{f}).

6. Système de régulation de température de cigarette électronique (100, 200, 300, 400, 500, 600, 700, 800, 900) selon la revendication 5, dans lequel le processeur (14, 44, 54) est couplé électriquement à l'au moins un élément de détection de température (13, 83, 93), et pré-stocke une première formule : R_{T} = R₅ * V_{f}/(Vₑ - V_{f}), une relation entre la valeur de résistance R_{T} de l'au moins un élément de détection de température (13, 83, 93) et la température t de l'au moins un élément de détection de température (13, 83, 93), et une seconde formule : T = t + Δt, le processeur (14, 44, 54) est configuré pour :
détecter la chute de tension V_{f} aux bornes de l'au moins un élément de détection de température (13, 83, 93) ;
recevoir la chute de tension V_{f} aux bornes de l'au moins un élément de détection de température (13, 83, 93), et calculer la température T de l'élément chauffant (12, 32, 52) en fonction de la première formule, de la seconde formule et de la relation entre la valeur de résistance R_{T} et la température t de l'élément de détection de température (13, 83, 93) ;
recevoir la température T de l'élément chauffant (12, 32, 52), comparer la température T de l'élément chauffant (12, 32, 52) au seuil supérieur pré-stocké de la température de fonctionnement T_{H} et au seuil inférieur pré-stocké de la température de fonctionnement T_{L}, et contrôler la tension de sortie ou la puissance de sortie de l'alimentation en électricité (11, 31, 51) vers l'élément chauffant (12, 32, 52) en fonction du résultat de la comparaison.

7. Système de régulation de température de cigarette électronique (100, 200, 300, 400, 500, 600, 700, 800, 900) selon la revendication 1, dans lequel le système de régulation de température de cigarette électronique (100, 200, 300, 400, 500, 600, 700, 800, 900) comprend en outre un commutateur thermostatique (36, 76), le commutateur thermostatique (36, 76) étant couplé en série entre l'alimentation en électricité (11, 31, 51) et l'élément chauffant (12, 32, 52), le commutateur thermostatique (36, 76) étant configuré pour réguler la température de l'élément chauffant (12, 32, 52) lorsque l'élément de détection de température (13, 83, 93) et/ou le processeur (14, 44, 54) sont défectueux.

8. Cigarette électronique (10) comprenant le système de régulation de température de cigarette électronique (100, 200, 300, 400, 500, 600, 700, 800, 900) selon l'une quelconque des revendications 1 à 7.
